# EUROPEAN PATENT APPLICATION

(11) **EP 3 297 123 A1**
(43) Date of publication of application: **21.03.2018**
(21) Application number: 16792854.8
(22) Date of filing: 05.04.2016
(51) Int. Cl.: H02J 50/00, H02J 7/02

(54) **WIRELESS POWER TRANSMISSION METHOD, WIRELESS POWER RECEPTION METHOD, AND APPARATUS THEREFOR**

(30) Priority: 12.05.2015 KR 20150065808
(71) Applicant: LG Innotek Co., Ltd., Seoul, 04637 (KR)
(72) Inventor: LEE, Jong Heon, Seoul 04637 (KR); PARK, Su Bin, Seoul 04637 (KR); PARK, Soo Young, Seoul 04637 (KR)
(74) Representative: DREISS Patentanwälte PartG mbB
(86) International application number: PCT/KR2016/003488
(87) International publication number: WO 2016/182208

(57) **Abstract**

The present invention can provide a multi-mode wireless power transmission and reception method, and an apparatus therefor. A wireless power transmission method in a wireless power transmission apparatus for wirelessly transmitting power to a wireless power reception apparatus, according to an embodiment of the present invention, may comprise the steps of: transmitting a first signal on the basis of a first wireless power transmission scheme; transmitting a second signal on the basis of a second wireless power transmission scheme; receiving, from the wireless power reception apparatus, a measurement result corresponding to at least one of the first signal and the second signal; and selecting a wireless power transmission scheme for the wireless power reception apparatus on the basis of the measurement result. Accordingly, the present invention has an advantage of being capable of wirelessly transmitting power by selecting a highly efficient wireless power transmission scheme.

## Description

### CROSS REFERENCE TO RELATED APPLICATION

This application claims the benefit of priority to Korean Patent Application No. 10-2015-0065808, filed on May 12 2015, which is hereby incorporated by reference as if fully set forth herein.

### [Technical Field]

Embodiments relate to a wireless power transmission technology, and more particularly, to a wireless power transmission and reception method allowing a wireless power transmission scheme to be adaptively selected based on power transmission efficiency in a wireless power transmission system supporting a plurality of wireless power transmission schemes, and an apparatus therefor.

### [Background]

Recently, as information and communication technology rapidly develops, a ubiquitous society based on information and communication technology is being formed.

In order for information communication devices to be connected anywhere and anytime, sensors equipped with a computer chip having a communication function should be installed in all facilities throughout society. Accordingly, power supply to these devices or sensors is becoming a new challenge. In addition, as the types of mobile devices such as Bluetooth handsets and iPods, as well as mobile phones, rapidly increase in number, charging the battery has required time and effort for users. As a way to address this issue, wireless power transmission technology has recently drawn attention.

Wireless power transmission (or wireless energy transfer) is a technology for wirelessly transmitting electric energy from a transmitter to a receiver using the induction principle of a magnetic field. Back in the 1800s, an electric motor or a transformer based on electromagnetic induction began to be used. Thereafter, a method of transmitting electric energy by radiating electromagnetic waves such as radio waves or lasers was tried. The principle of electromagnetic induction also forms the basis of charging electric toothbrushes we often use and some wireless shavers.

Up to now, wireless energy transmission schemes may be broadly classified into electromagnetic induction, electromagnetic resonance, and RF transmission using a short-wavelength radio frequency.

In the electromagnetic induction scheme, when two coils are arranged adjacent to each other and a current is applied to one of the coils, a magnetic flux generated at this time generates electromotive force in the other coil. This technology is being rapidly commercialized mainly for small devices such as mobile phones. In the electromagnetic induction scheme, power of up to several hundred kilowatts (kW) may be transmitted with high efficiency, but the maximum transmission distance is 1 cm or less. As a result, the device should be generally arranged adjacent to the charger or the floor.

The electromagnetic resonance scheme uses an electric field or a magnetic field instead of using an electromagnetic wave or current. The electromagnetic resonance scheme is advantageous in that the scheme is safe to other electronic devices or the human body since it is hardly influenced by the electromagnetic waves. However, this scheme may be used only over a limited distance and in a limited space, and has somewhat low energy transfer efficiency.

The short-wavelength wireless power transmission scheme (simply, RF transmission scheme) takes advantage of the fact that energy can be transmitted and received directly in the form of radio waves. This technology is an RF power transmission scheme using a rectenna. A rectenna, which is a compound of "antenna" and "rectifier", refers to a device that converts RF power directly into direct current (DC) power. That is, the RF method is a technology for converting AC radio waves into DC waves. Recently, with improvement in efficiency, commercialization of RF technology has been actively researched.

Wireless power transmission technology can be applied to various industries such as the IT industry, the railroad industry, and the home appliance industry as well as the mobile device industry.

However, conventionally, a wireless power transmission method supporting a plurality of wireless charging schemes has not been provided.

### [SUMMARY]

the present disclosure has been made in view of the above problems, and embodiments provide a wireless power transmission/reception method allowing a wireless power transmission scheme to be adaptively selected based on power transmission efficiency in a wireless power transmission system supporting a multi-mode, and an apparatus therefor.

Embodiments further provide a wireless power transmission/reception method allowing a wireless power transmission scheme to be adaptively selected based on charging efficiency in a wireless power transmission system supporting a multi-mode, and an apparatus therefor.

The technical objects that can be achieved through the embodiments are not limited to what has been particularly described hereinabove and other technical objects not described herein will be more clearly understood by those skilled in the art from the following detailed description.

Embodiments may provide multi-mode wireless power transmission/reception methods and apparatuses therefor.

In one embodiment, a method for transmitting wireless power by a wireless power transmission apparatus for wirelessly transmitting power to a wireless power reception apparatus may include transmitting a first signal based on a first wireless power transmission scheme, transmitting a second signal based on a second wireless power transmission scheme, receiving, from the wireless power reception apparatus, a measurement result corresponding to at least one of the first signal and the second signal, and selecting a wireless power transmission scheme for the wireless power reception apparatus based on the measurement result.

Here, the first wireless power transmission scheme may be an electromagnetic induction scheme and the second wireless power transmission scheme may be an electromagnetic resonance scheme.

In addition, the first signal may be a ping signal and the second signal may be a beacon signal.

The ping signal may be a digital ping signal and the beacon signal may be a long beacon signal.

The method may further include calculating a power transmission efficiency for each of the wireless power transmission schemes based on the received measurement result, wherein the wireless power transmission scheme may be selected based on the calculated power transmission efficiency.

The received measurement result may include received signal strength information corresponding to at least one of the first signal and the second signal.

Here, the received signal strength information may be rectifier output voltage intensity information about a receiver.

The method may further include calculating a charging efficiency for each of the wireless power transmission schemes based on the received measurement result, wherein the wireless power transmission scheme may be selected based on the calculated charging efficiency.

The received measurement result may include information about a voltage level applied to a load of the wireless power reception apparatus corresponding to at least one of the first signal and the second signal.

The charging efficiency may be calculated based on the voltage level applied to the load and a pre-collected voltage level required by the load.

The measurement result corresponding to the first signal may be received through in-band communication defined in the electromagnetic induction scheme.

The measurement result corresponding to the second signal may be received through out-of-band communication defined in the electromagnetic resonance scheme.

The measurement result corresponding to the first signal and the second signal may be received through out-of-band communication defined in the electromagnetic resonance scheme.

The first signal and the second signal may be repeatedly transmitted on predefined cycles in a non-overlapping manner, respectively.

The method may further include transmitting information about the selected wireless power transmission scheme to the wireless power reception apparatus.

In another embodiment, a method for receiving wireless power by a wireless power reception apparatus for receiving wireless power from a wireless power transmission apparatus may include measuring a received signal strength of a first signal based on a first wireless power transmission scheme, transmitting information about the measured received signal strength of the first signal to the wireless power transmission apparatus, measuring a received signal strength of a second signal based on a second wireless power transmission scheme, and transmitting information about the measured received signal strength of the second signal to the wireless power transmission apparatus, wherein the wireless power may be received in a wireless power transmission scheme selected according to a power transmission efficiency calculated based on the information about the received signal strengths of the first signal to the second signal.

Here, the first wireless power transmission scheme may be an electromagnetic induction scheme and the second wireless power transmission scheme may be an electromagnetic resonance scheme.

The first signal may be a ping signal and the second signal may be a beacon signal.

Here, the ping signal may be a digital ping signal and the beacon signal may be a long beacon signal.

The received signal strengths may be rectifier output voltage strengths of the wireless power reception apparatus.

The method may further include receiving, from the wireless power transmission apparatus, information about the selected wireless power transmission scheme.

The information about the received signal strength of the first signal may be transmitted to the wireless power transmission apparatus through in-band communication defined in the electromagnetic induction method.

The information about the received signal strength of the second signal may be transmitted to the wireless power transmission apparatus through out-of-band communication defined in the electromagnetic resonance scheme.

Information about the received signal strengths corresponding to the first signal and the second signal may be transmitted to the wireless power transmission apparatus through out-of-band communication defined in the electromagnetic resonance scheme.

In another embodiment, a wireless power transmission apparatus for wirelessly transmitting power to a wireless power reception apparatus may include a first transmission unit configured to transmit wireless power based on an electromagnetic induction scheme, a second transmission unit configured to transmit wireless power based on an electromagnetic resonance scheme, a first communication unit configured to perform in-band communication, a second communication unit configured to perform out-of-band communication, and a controller configured to control a first signal and a second signal to be transmitted in a predetermined pattern through the first transmission unit and the second transmission unit to sense presence of the communication units and the wireless power reception apparatus, receive a measurement result corresponding to at least one of the first signal and the second signal from the wireless power reception apparatus using at least one of the in-band communication and the out-of-band communication, and select a wireless power transmission scheme based on the measurement result.

Here, the first signal may be a ping signal and the second signal may be a beacon signal.

Here, the ping signal may be a digital ping signal and the beacon signal may be a long beacon signal.

The controller may calculate a power transmission efficiency for each of the wireless power transmission schemes based on the measurement result, and select the wireless power transmission scheme based on the calculated power transmission efficiency.

The measurement result may include received signal strength information corresponding to at least one of the first signal and the second signal.

Here, the received signal strength information may be rectifier output voltage intensity information about the wireless power reception apparatus.

The controller may calculate a charging efficiency for each of the wireless power transmission schemes based on the measurement result, and select the wireless power transmission scheme based on the calculated charging efficiency.

The measurement result may include information about a voltage level applied to a load of the wireless power reception apparatus corresponding to at least one of the first signal and the second signal, wherein the controller may calculate the charging efficiency based on the voltage level applied to the load and a pre-collected voltage level required by the load.

The controller may control the first signal and the second signal to be repeatedly transmitted on predefined cycles in a non-overlapping manner, respectively.

In addition, the controller may transmit information about the selected wireless power transmission scheme to the wireless power reception apparatus using one of the in-band communication or the out-of-band communication.

In another embodiment, a wireless power reception apparatus for receiving wireless power from a wireless power transmission apparatus may include a first reception unit configured to receive wireless power based on an electromagnetic induction scheme, a second reception unit configured to receive wireless power based on an electromagnetic resonance scheme, a first communication unit configured to perform in-band communication, a second communication unit configured to perform out-of-band communication, and a controller configured to transmit, upon receiving a first signal and a second signal through the first reception unit and the second reception unit, a measurement result corresponding to at least one of the first signal and the second signal to the wireless power transmission apparatus using at least one of the in-band communication and the out-of-band communication.

The above-described aspects of the present disclosure are merely a part of preferred embodiments of the present disclosure. Those skilled in the art will derive and understand various embodiments reflecting the technical features of the present disclosure from the following detailed description of the present disclosure.

The methods and apparatuses according to the embodiments have the following effects.

According to embodiments, multi-mode wireless power transmission and reception methods and an apparatus and system therefor are provided.

According to embodiments, a multi-mode wireless power transmission method capable of improving power transmission efficiency and an apparatus and system therefor are provided.

According to embodiments, charging efficiencies of respective wireless charging methods are compared through out-of-band communication and an optimal wireless charging method is adaptively selected based on the comparison. Thereby, high-efficiency wireless charging may be obtained

In addition, according to embodiments, a wireless power transmission apparatus supporting a plurality of wireless power transmission schemes maintains optimal charging efficiency. Thereby, charging time may be minimized.

In addition, according to embodiments, a wireless power transmission apparatus always maintains the optimal power transmission efficiency. Thereby, waste of power may be minimized.

It will be appreciated by those skilled in the art that that the effects that can be achieved through the embodiments of the present disclosure are not limited to those described above and other effects of the present disclosure will be more clearly understood from the following detailed description.

### [BRIEF DESCRIPTION OF THE DRAWINGS]

The accompanying drawings, which are included to provide a further understanding of the disclosure and are incorporated in and constitute a part of this application, illustrate embodiments of the disclosure and, together with the description, serve to explain the principles of the disclosure. It is to be understood, however, that the technical features of the present disclosure are not limited to the specific drawings, and the features disclosed in the drawings may be combined with each other to constitute a new embodiment.
FIG. 1 is a block diagram illustrating the structure of a wireless power transmission system according to an embodiment of the present disclosure.
FIG. 2 is a diagram illustrating a type and characteristics of a wireless power transmitter according to an embodiment of the present disclosure.
FIG. 3 is a diagram illustrating a type and characteristics of a wireless power receiver according to an embodiment of the present disclosure.
FIG. 4 shows equivalent circuit diagrams of a wireless power transmission system according to an embodiment of the present disclosure.
FIG. 5 is a state transition diagram illustrating a state transition procedure of a wireless power transmitter according to an embodiment of the present disclosure.
FIG. 6 is a state transition diagram illustrating a wireless power receiver according to an embodiment of the present disclosure.
FIG. 7 illustrates operation regions of a wireless power receiver according to V_{RECT} according to an embodiment of the present disclosure.
FIG. 8 is a configuration diagram of a wireless power transmission system according to an embodiment of the present disclosure.
FIG. 9 is a flowchart illustrating a wireless charging procedure according to an embodiment of the present disclosure.
FIG. 10 is a diagram illustrating a wireless power transmission system of an electromagnetic induction scheme according to an embodiment of the present disclosure.
FIG. 11 is a diagram illustrating a wireless charging system of an electromagnetic induction scheme according to another embodiment of the present disclosure.
FIG. 12 is a state transition diagram illustrating the operation of a wireless charging transmission apparatus supporting an electromagnetic induction scheme according to an embodiment of the present disclosure.
FIG. 13 is a state transition diagram illustrating the operation of a wireless charging reception apparatus supporting an electromagnetic induction scheme according to an embodiment of the present disclosure.
FIG. 14 is a block diagram illustrating an internal structure of a wireless charging reception apparatus supporting an electromagnetic induction scheme according to an embodiment of the present disclosure.
FIG. 15 illustrates a wireless power transmission method in a wireless power transmission apparatus supporting a plurality of wireless power transmission schemes according to an embodiment of the present disclosure.
FIG. 16 is a flowchart illustrating a wireless power transmission method in a wireless power transmission apparatus according to an embodiment of the present disclosure.
FIG. 17 is a flowchart illustrating a wireless power transmission method in a wireless power transmission apparatus according to another embodiment of the present disclosure.
FIG. 18 is a flowchart illustrating a wireless power transmission method in a wireless power transmission apparatus according to another embodiment of the present disclosure.
FIG. 19 is a block diagram illustrating the structure of a wireless power reception apparatus according to an embodiment of the present disclosure.
FIG. 20 is a block diagram illustrating the structure of a wireless power transmission apparatus according to an embodiment of the present disclosure.

### [DETAILED DESCRIPTION]

Hereinafter, an apparatus and various methods to which embodiments of the present disclosure are applied will be described in detail with reference to the drawings. As used herein, the suffixes "module" and "unit" are added or used interchangeably to facilitate preparation of this specification and are not intended to suggest distinct meanings or functions.

While all elements constituting embodiments of the present disclosure have been described as being connected into one body or operating in connection with each other, the disclosure is not limited to the described embodiments. That is, within the scope of the present disclosure, one or more of the elements may be selectively connected to operate. In addition, although all elements can be implemented as one independent hardware device, some or all of the elements may be selectively combined to implement a computer program having a program module for executing a part or all of the functions combined in one or more hardware devices. Code and code segments that constitute the computer program can be easily inferred by those skilled in the art. The computer program may be stored in a computer-readable storage medium, read and executed by a computer to implement an embodiment of the present disclosure. The storage medium of the computer program may include a magnetic recording medium, and an optical recording medium, a carrier wave medium.

The terms "include," "comprise" and "have" should be understood as not pre-excluding the possibility of existence or addition of one or more other components unless otherwise stated. All terms, including technical and scientific terms, have the same meaning as commonly understood by one of ordinary skill in the art to which this invention pertains, unless otherwise defined. Commonly used terms, such as those defined in typical dictionaries, should be interpreted as being consistent with the contextual meaning of the relevant art, and are not to be construed in an ideal or overly formal sense unless expressly defined to the contrary.

In describing the components of the present invention, terms such as first, second, A, B, (a), and (b) may be used. These terms are used only for the purpose of distinguishing one constituent from another, and the terms do not limit the nature, order or sequence of the components. When one component is said to be "connected," "coupled" or "linked" to another, it should be understood that this means the one component may be directly connected or linked to another one or another component may be interposed between the components.

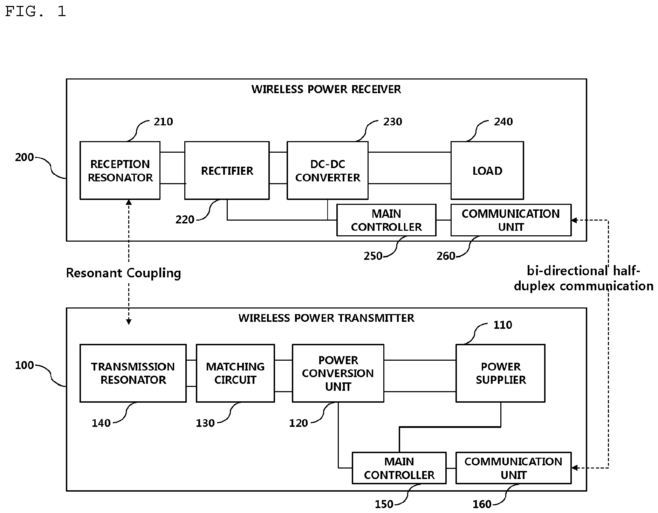

FIG. 1 is a block diagram illustrating the structure of a wireless power transmission system according to an embodiment of the present disclosure.

Referring to FIG. 1, a wireless power transmission system may include a wireless power transmitter 100 and a wireless power receiver 200.

While FIG. 1 illustrates that the wireless power transmitter 100 transmits wireless power to one wireless power receiver 200, this is merely one embodiment, and the wireless power transmitter 100 according to another embodiment of the present disclosure may transmit wireless power to a plurality of wireless power receivers 200. It should be noted that the wireless power receiver 200 according to yet another embodiment may simultaneously receive wireless power from a plurality of wireless power transmitters 100.

The wireless power transmitter 100 may generate a magnetic field using a specific power transmission frequency to transmit power to the wireless power receiver 200.

The wireless power receiver 100 may receive power by tuning to the same frequency as the frequency used by the wireless power transmitter 100.

As an example, the frequency for power transmission may be, but is not limited to, a 6.78 MHz band.

That is, the power transmitted by the wireless power receiver 100 may be delivered to the wireless power receiver 200 that is in resonance with the wireless power transmitter 100.

The maximum number of wireless power receivers 200 capable of receiving power from one wireless power transmitter 100 may be determined based on the maximum transmit power level of the wireless power transmitter 100, the maximum power reception level of the wireless power receiver 200, and the physical structures of the wireless power transmitter 100 and the wireless power receiver 200.

The wireless power transmitter 100 and the wireless power receiver 200 can perform bidirectional communication in a frequency band different from the frequency band for wireless power transmission, i.e., the resonant frequency band. As an example, bidirectional communication may employ a half-duplex Bluetooth low energy (BLE) communication protocol.

The wireless power transmitter 100 and the wireless power receiver 200 may exchange characteristics and state information with each other, namely, power negotiation information via bidirectional communication.

As an example, the wireless power receiver 200 may transmit predetermined power reception state information for controlling the level of power received from the wireless power transmitter 100 to the wireless power transmitter 100 via bidirectional communication. The wireless power transmitter 100 may dynamically control the transmit power level based on the received power reception state information. Thereby, the wireless power transmitter 100 may not only optimize the power transmission efficiency, but also provide a function of preventing load breakage due to overvoltage, a function of preventing power from being wasted due to under-voltage, and the like.

The wireless power transmitter 100 may also perform functions such as authenticating and identifying the wireless power receiver 100 through bidirectional communication, identifying incompatible devices or non-rechargeable objects, identifying a valid load, and the like.

Hereinafter, a wireless power transmission process according to the resonance scheme will be described in more detail with reference to FIG. 1.

The wireless power transmitter 100 may include a power supplier 110, a power conversion unit 120, a matching circuit 130, a transmission resonator 140, a main controller 150, and a communication unit 160.

The power supplier 110 may supply a specific supply voltage to the power conversion unit 120 under control of the main controller 150. The supply voltage may be a DC voltage or an AC voltage.

The power conversion unit 210 may convert the voltage received from the power supplier 110 into a specific voltage under control of the main controller 150. To this end, the power conversion unit 210 may include at least one of a DC/DC converter, an AC/DC converter, and a power amplifier.

The matching circuit 130 is a circuit that matches impedances between the power conversion unit 120 and the transmission resonator 140 to maximize power transmission efficiency.

The transmission resonator 140 may wirelessly transmit power using a specific resonant frequency according to the voltage applied from the matching circuit 130.

The wireless power receiver 100 may include a reception resonator 210, a rectifier 220, a DC-DC converter 230, a load 240, a main controller 250 and a communication unit 260.

The reception resonator 210 may receive power transmitted by the transmission resonator 140 through the resonance effect.

The rectifier 210 may function to convert the AC voltage supplied from the reception resonator 210 into a DC voltage.

The DC-DC converter 230 may convert the rectified DC voltage into a specific DC voltage required by the load 240.

The main controller 250 may control the operation of the rectifier 220 and the DC-DC converter 230 or may generate the characteristics and state information on the wireless power receiver 200 and transmit the same through the communication unit 260. For example, the main controller 250 may monitor the intensities of the output voltage and current from the rectifier 220 and the DC-DC converter 230 to control the operation of the rectifier 220 and the DC-DC converter 230.

The intensity information on the monitored output voltage and current may be transmitted to the wireless power transmitter 100 through the communication unit 260 in real time.

In addition, the main controller 250 may compare the rectified DC voltage with a predetermined reference voltage and determine whether the voltage is in an overvoltage state or an under-voltage state. When a system error state is sensed as a result of the determination, the controller 250 may transmit the sensed result to the wireless power transmitter 100 through the communication unit 260.

When the system error state is sensed, the main controller 250 may control the operation of the rectifier 220 and the DC-DC converter 230 or control the power applied to the load 240 using a predetermined overcurrent interruption circuit including at least one of a switch and a Zener diode, in order to prevent the load from being damaged.

In FIG. 1, the main controller 150, 250 and the communication unit 160, 260 of each of the transmitter and the receiver are shown as being configured as different modules, but this is merely one embodiment. It is to be noted that the main controller 150, 250 and the communication unit 160, 260 can be configured as a single module.

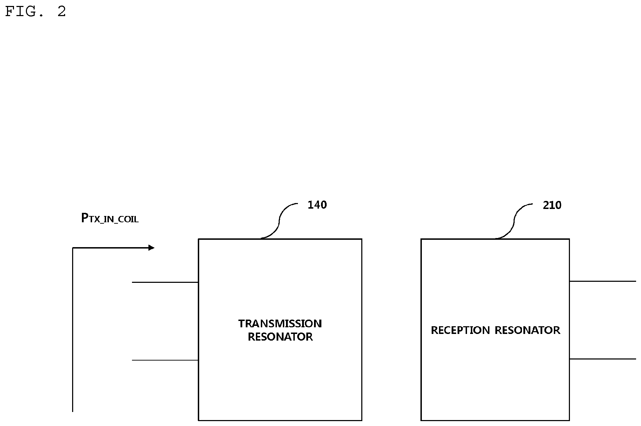

FIG. 2 is a diagram illustrating a type and characteristics of a wireless power transmitter according to an embodiment of the present disclosure.

Types and characteristics of the wireless power transmitter and the wireless power receiver according to the present disclosure may be classified into classes and categories.

The type and characteristics of the wireless power transmitter may be broadly identified by the following three parameters.

First, the wireless power transmitter may be identified by a class determined according to the intensity of the maximum power applied to the transmission resonator 140.

Here, the class of the wireless power transmitter may be determined by comparing the maximum value of the power P_{TX_IN_COIL} applied to the transmission resonator 140 with a predefined maximum input power for each class specified in a wireless power transmitter class table (hereinafter referred to as Table 1). Here, P_{TX_IN_COIL} may be an average real number value calculated by dividing the product of the voltage V(t) and the current I(t) applied to the transmission resonator 140 for a unit time by the unit time.

**TABLE 1**

| Class | Maximum input power | Minimum category support requirements | Maximum number of supportable devices |
|---|---|---|---|
| Class 1 | 2 W | 1 x Class 1 | 1 x Class 1 |
| Class 2 | 10 W | 1 x Class 3 | 2 x Class 2 |
| Class 3 | 16 W | 1 x Class 4 | 2 x Class 3 |
| Class 4 | 33 W | 1 x Class 5 | 3 x Class 3 |
| Class 5 | 50 W | 1 x Class 6 | 4 x Class 3 |
| Class 6 | 70 W | 1 x Class 6 | 5 x Class 3 |

The classes shown in Table 1 are merely an embodiment, and new classes may be added or existing classes may be deleted. It should also be noted that the maximum input power for each class, the minimum category support requirements, and the maximum number of supportable devices may vary depending on the use, shape, and implementation of the wireless power transmitter.

For example, referring to Table 1, when the maximum value of the power P_{TX_IN_COIL} applied to the transmission resonator 140 is greater than or equal to the value of P_{TX_IN_MAX} corresponding to Class 3 and less than the value of P_{TX_IN_MAX} corresponding to Class 4, the class of the wireless power transmitter may be determined as Class 3.

Second, the wireless power transmitter may be identified according to the minimum category support requirements corresponding to the identified class.

Here, the minimum category support requirement may be a supportable number of wireless power receivers corresponding to the highest-level category of the wireless power receiver categories supportable by the wireless power transmitter of the corresponding class. That is, the minimum category support requirement may be the minimum value of the maximum category devices.

For example, referring to Table 1, a wireless power transmitter of Class 3 should support at least one wireless power receiver of Category 5. Of course, in this case, the wireless power transmitter should support a wireless power receiver 100 that falls into a category lower than the category level corresponding to the minimum category support requirement.

It should also be noted that the wireless power transmitter may support a wireless power receiver of a higher-level category upon determining that the category whose level is higher than the category corresponding to the minimum category support requirement can be supported.

Third, the wireless power transmitter may be identified by the maximum number of supportable devices corresponding to the identified class. Here, the maximum number of supportable devices may be identified by the minimum number of supportable wireless power receivers corresponding to the lowest level category among the categories which are supportable in the class (hereinafter, simply referred to as the minimum number of supportable devices). For example, referring to Table 1, the wireless power transmitter of Class 3 should support at least two wireless power receivers corresponding to Category 3 which is the lowest level category.

The wireless power transmitter according to the present disclosure must perform wireless power transmission within the available power for at least up to the number defined in Table 1 if there is no particular reason not to allow the power transmission request from the wireless power receivers.

In one example, if there is not enough available power to accept the power transmission request the wireless power transmitter may not accept a power transmission request from the wireless power receiver.

In another example, when the wireless power transmitter accepts a power transmission request, it may not accept a power transmission request from a corresponding wireless power receiver if the number of acceptable wireless power receivers is exceeded.

In another example, the wireless power transmitter may not accept a power transmission request from a wireless power receiver if the category of the wireless power receiver requesting power transmission exceeds a category level that can be supported in the class of the wireless power transmitter.

In another example, the wireless power transmitter may not accept a power transmission request of the wireless power receiver if the internal temperature thereof exceeds a reference value.

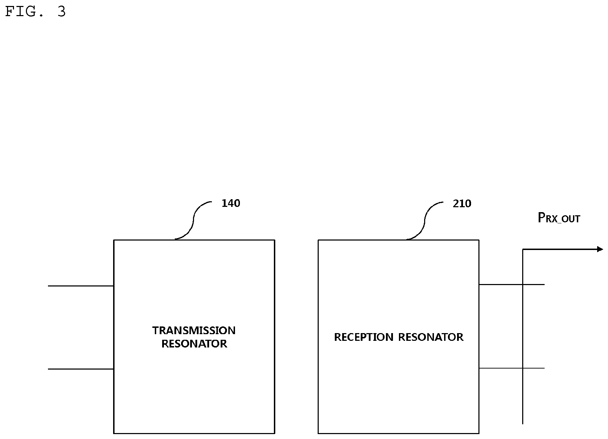

FIG. 3 is a diagram illustrating a type and characteristics of a wireless power receiver according to an embodiment of the present disclosure.

As shown in FIG. 3, the average output power P_{RX_OUT} of the reception resonator 210 is a real number value calculated by dividing the product of the voltage V(t) and the current I(t) output by the reception resonator 210 for a unit time by the unit time.

The category of the wireless power receiver may be defined based on the maximum output power P_{RX_OUT_MAX} of the reception resonator 210, as shown in Table 2 below.

**TABLE 2**

| Category | Maximum input power | Application example |
|---|---|---|
| Category 1 | TBD | Bluetooth handset |
| Category 2 | 3.5 W | Feature phone |
| Category 3 | 6.5 W | Smart phone |
| Category 4 | 13 W | Tablet |
| Category 5 | 25 W | Small laptop |
| Category 6 | 37.5 W | Laptop |
| Category 6 | 50 W | TBD |

For example, if the charging efficiency at the load stage is 80% or more, the wireless power receiver of Category 3 may supply power of 5 W to the charging port of the load.

The categories disclosed in Table 2 are merely an embodiment, and new categories may be added or existing categories may be deleted. It should also be noted that the maximum output power for each category and application examples shown in Table 2 may vary depending on the use, shape and implementation of the wireless power receiver.

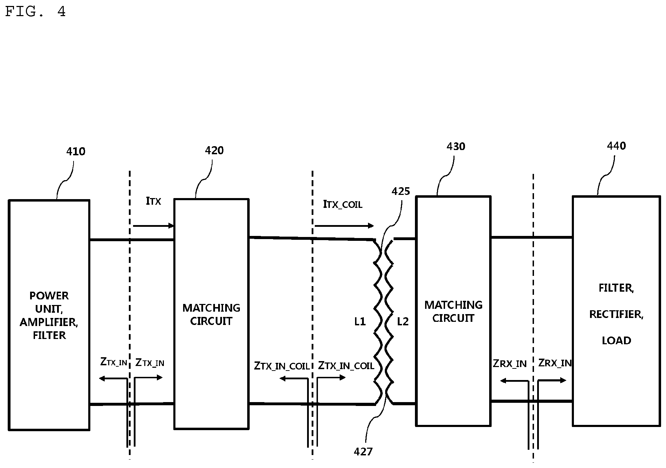

FIG. 4 shows equivalent circuit diagrams of a wireless power transmission system according to an embodiment of the present disclosure.

Specifically, FIG. 4 shows interface points on the equivalent circuit at which reference parameters, which will be described later, are measured.

Hereinafter, meanings of the reference parameters shown in FIG. 4 will be briefly described.

I_{TX} and I_{TX_COIL} denote the RMS (Root Mean Square) current applied to the matching circuit 410 of the wireless power transmitter and the RMS current applied to the transmission resonator coil 420 of the wireless power transmitter.

Z_{TX_IN} and Z_{TX_IN_COIL} denote the input impedance at at the front end of the matching circuit 410 and the input impedance at the rear end of the matching circuit 410 and the front end of the transmission resonator coil 420, respectively.

L1 and L2 denote the inductance value of the transmission resonator coil 420 and the inductance value of the reception resonator coil 430, respectively.

Z_{RX_IN} denotes the input impedance at the rear end of the matching circuit 440 of the wireless power receiver and the front end of the filter/rectifier/load 450.

The resonant frequency used in the operation of the wireless power transmission system according to an embodiment of the present disclosure may be 6.78 MHz ± 15 kHz.

In addition, the wireless power transmission system according to an embodiment may provide simultaneous charging (i.e., multi-charging) for a plurality of wireless power receivers. In this case, even if a wireless power receiver is newly added or removed, the received power variation of the remaining wireless power receivers may be controlled so as not to exceed a predetermined reference value. For example, the received power variation may be ± 10%, but embodiments are not limited thereto.

The condition for maintaining the received power variation is that the existing wireless power receivers should not overlap a wireless power receiver that is added to or removed from the charging area.

When the matching circuit 440 of the wireless power receiver is connected to the rectifier, the real part of Z_{TX_IN} may be inversely proportional to the load resistance of the rectifier (hereinafter, referred to as R_{RECT}). That is, an increase in R_{RECT} may decrease Z_{TX_IN}, and a decrease in R_{RECT} may increase Z_{TX_IN}.

The resonator coupling efficiency according to the present disclosure may be a maximum power reception ratio calculated by dividing the power transmitted from the reception resonator coil to the load 440 by the power carried in the resonant frequency band in the transmission resonator coil 420. The resonator coupling efficiency between the wireless power transmitter and the wireless power receiver may be calculated when the reference port impedance Z_{TX_IN} of the transmission resonator and the reference port impedance Z_{RX_IN} of the reception resonator are perfectly matched.

Table 3 below is an example of the minimum resonator coupling efficiencies according to the classes of the wireless power transmitter and the classes of the wireless power receiver according to an embodiment of the present disclosure.

**TABLE 3**

| | Category 1 | Category 2 | Category 3 | Category 4 | Category 5 | Category 6 | Category 7 |
|---|---|---|---|---|---|---|---|
| Class 1 | N/A | N/A | N/A | N/A | N/A | N/A | N/A |
| Class 2 | N/A | 74% (1.3) | 74% (1.3) | N/A | N/A | N/A | N/A |
| Class 3 | N/A | 74% (-1.3) | 74% (-1.3) | 76% (-1.2) | N/A | N/A | N/A |
| Class 4 | N/A | 50% (-3) | 65% (-1.9) | 73% (-1.4) | 76% (-1.2) | N/A | N/A |
| Class 5 | N/A | 40% (-4) | 60% (-2.2) | 63% (-2) | 73% (-1.4) | 76% (-1.2) | N/A |
| Class 5 | N/A | 30% (-5.2) | 50% (-3) | 54% (-2.7) | 63% (-2) | 73% (-1.4) | 76% (-1.2) |

When a plurality of wireless power receivers is used, the minimum resonator coupling efficiencies corresponding to the classes and categories shown in Table 3 may increase.

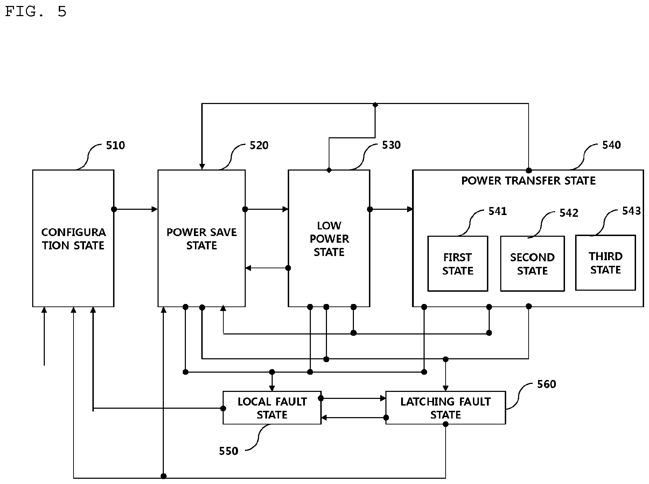

FIG. 5 is a state transition diagram illustrating a state transition procedure of a wireless power transmitter according to an embodiment of the present disclosure.

Referring to FIG. 5, the states of the wireless power transmitter may include a configuration state 510, a power save state 520, a low power state 530, a power transfer state 540, a local fault state 550, and a latching fault state 560.

When power is applied to the wireless power transmitter, the wireless power transmitter may transition to the configuration state 510. The wireless power transmitter may transition to a power save state 520 when a predetermined reset timer expires in the configuration state 510 or when the initialization procedure is completed.

In the power save state 520, the wireless power transmitter may generate a beacon sequence and transmit the same through a resonant frequency band.

Here, the wireless power transmitter may control the beacon sequence to be initiated within a predetermined time after entering the power save state 520. For example, the wireless power transmitter may control the beacon sequence to be initiated within 50 ms after transition to the power save state 520. However, embodiments are not limited thereto.

In the power save state 520, the wireless power transmitter may periodically generate and transmit a first beacon sequence for sensing a wireless power receiver, and sense change in impedance of the reception resonator, that is, load variation. Hereinafter, for simplicity, the first beacon and the first beacon sequence will be referred to as a short beacon and a short beacon sequence, respectively.

In particular, the short beacon sequence may be repeatedly generated and transmitted at a constant time interval t_{CYCLE} during a short period t_{SHORT_BEACON} such that the standby power of the wireless power transmitter may be saved until a wireless power receiver is sensed. For example, t_{SHORT_BEACON} may be set to 30 ms or less, and T_{CYCLE} may be set to 250 ms ± 5 ms. In addition, the current intensity of the short beacon may be greater than a predetermined reference value, and may be gradually increased during a predetermined time period. For example, the minimum current intensity of the short beacon may be set to be sufficiently large such that a wireless power receiver of Category 2 or a higher category in Table 2 above may be sensed.

The wireless power transmitter according to the present disclosure may be provided with a predetermined sensing means for sensing change in reactance and resistance of the reception resonator according to the short beacon.

In addition, in the power save state 520, the wireless power transmitter may periodically generate and transmit a second beacon sequence for providing sufficient power necessary for booting and response of the wireless power receiver. Hereinafter, for simplicity, the second beacon and the second beacon sequence will be referred to as a long beacon and a long beacon sequence, respectively.

That is, the wireless power receiver may broadcast a predetermined response signal over an out-of-band communication channel when booting is completed through the second beacon sequence.

In particular, the long beacon sequence may be generated and transmitted at a constant time interval t_{LONG_BEACON_PERIOD} during a relatively long period t_{LONG_BEACON} compared to the short beacon to supply sufficient power necessary to boot the wireless power receiver. For example, t_{LONG_BEACON} may be set to 105 ms + 5 ms, and t_{LONG_BEACON_PERIOD} may be set to 850 ms. The current intensity of the long beacon may be stronger than the current intensity of the short beacon. In addition, the long beacon may maintain power of a certain intensity during the transmission period.

Thereafter, the wireless power transmitter may wait to receive a predetermined response signal during the long beacon transmission period after change in impedance of the reception resonator is sensed. Hereinafter, for simplicity, the response signal will be referred to as an advertisement signal. Here, the wireless power receiver may broadcast the advertisement signal in an out-of-band communication frequency band that is different from the resonant frequency band.

In one example, the advertisement signal may include at least one or any one of message identification information for identifying a message defined in the out-of-band communication standard, a unique service or wireless power receiver identification information for identifying whether the wireless power receiver is legitimate or compatible with the wireless power transmitter, information about the output power of the wireless power receiver, information about the rated voltage/current applied to the load, antenna gain information about the wireless power receiver, information for identifying the category of the wireless power receiver, wireless power receiver authentication information, information about whether or not the overvoltage protection function is provided, and version information about the software installed on the wireless power receiver.

Upon receiving the advertisement signal, the wireless power transmitter may establish an out-of-band communication link with the wireless power receiver after transitioning from the power save state 520 to the low power state 530. Subsequently, the wireless power transmitter may perform the registration procedure for the wireless power receiver over the established out-of-band communication link. For example, if the out-of-band communication is Bluetooth low energy communication, the wireless power transmitter may perform Bluetooth pairing with the wireless power receiver and exchange at least one of the state information, characteristic information, and control information about each other via the paired Bluetooth link.

If the wireless power transmitter transmits a predetermined control signal for initiating charging via out-of-band communication, i.e. a predetermined control signal for requesting that the wireless power receiver transmit power to the load, to the wireless power receiver in the low power state 530, the state of the wireless power transmitter may transition from the low power state 530 to the power transfer state 540.

If the out-of-band communication link establishment procedure or registration procedure is not normally completed in the low power state 530, the wireless power transmitter may transition from the low power state 530 to the power save state 520.

A separate independent link expiration timer by which the wireless power transmitter may connect to each wireless power receiver may be driven, and the wireless power receiver may transmit a predetermined message for announcing its presence to the wireless power transmitter on a predetermined time cycle before the link expiration timer expires. The link expiration timer is reset each time the message is received. If the link expiration timer does not expire, the out-of-band communication link established between the wireless power receiver and the wireless power receiver may be maintained.

If all of the link expiration timers corresponding to the out-of-band communication link established between the wireless power transmitter and the at least one wireless power receiver have expired in the low power state 530 or the power transfer state 540, the wireless power transmitter may transition to the power save state 520.

In addition, the wireless power transmitter in the low power state 530 may drive a predetermined registration timer when a valid advertisement signal is received from the wireless power receiver. When the registration timer expires, the wireless power transmitter in the low power state 530 may transition to the power save state 520. At this time, the wireless power transmitter may output a predetermined notification signal notifying that registration has failed through a notification display means (including, for example, an LED lamp, a display screen, and a beeper) provided in the wireless power transmitter.

Further, in the power transfer state 540, when charging of all connected wireless power receivers is completed, the wireless power transmitter may transition to the low power state 530.

In particular, the wireless power receiver may allow registration of a new wireless power receiver in states other than the configuration state 510, the local fault state 550, and the latching fault state 560.

In addition, the wireless power transmitter may dynamically control the transmit power based on the state information received from the wireless power receiver in the power transfer state 540.

Here, the receiver state information transmitted from the wireless power receiver to the wireless power transmitter may include at least one of required power information, information on the voltage and/or current measured at the rear end of the rectifier, charge state information, information for notifying the overcurrent, overvoltage and/or overheated state, and information indicating whether or not a means for cutting off or reducing power transferred to the load according to overcurrent or overvoltage is activated. The receiver state information may be transmitted with a predetermined periodicity or transmitted every time a specific event is generated. In addition, the means for cutting off or reducing the power transferred to the load according to the overcurrent or overvoltage may be provided using at least one of an ON/OFF switch and a Zener diode.

According to another embodiment, the receiver state information transmitted from the wireless power receiver to the wireless power transmitter may further include at least one of information indicating that an external power source is connected to the wireless power receiver by wire and information indicating that the out-of-band communication scheme has changed (e.g., the communication scheme may change from NFC (Near Field Communication) to BLE (Bluetooth Low Energy) communication).

According to another embodiment of the present disclosure, a wireless power transmitter may adaptively determine the intensity of power to be receiver by each wireless power receiver based on at least one of the currently available power of the power transmitter, the priority of each wireless power receiver, and the number of connected wireless power receivers. Here, the power intensity of each wireless power receiver may be determined as a proportion of power to be received with respect to the maximum power that may be processed by the rectifier of the corresponding wireless power receiver.

Thereafter, the wireless power transmitter may transmit, to the wireless power receiver, a predetermined power control command including information about the determined power intensity. Then, the wireless power receiver may determine whether power control can be performed based on the power intensity determined by the wireless power transmitter, and transmit the determination result to the wireless power transmitter through a predetermined power control response message.

According to another embodiment of the present disclosure, a wireless power receiver may transmit predetermined receiver state information indicating whether wireless power control can be performed according to a power control command of a wireless power transmitter before receiving the power control command.

The power transfer state 540 may be any one of a first state 541, a second state 542 and a third state 543 depending on the power reception state of the connected wireless power receiver.

In one example, the first state 541 may indicate that the power reception state of all wireless power receivers connected to the wireless power transmitter is a normal voltage state.

The second state 541 may indicate that the power reception state of at least one wireless power receiver connected to the wireless power transmitter is a low voltage state and there is no wireless power receiver which is in a high voltage state.

The third state 541 may indicate that the power reception state of at least one wireless power receiver connected to the wireless power transmitter is a high voltage state.

When a system error is sensed in the power save state 520, the low power state 530, or the power transfer state 540, the wireless power transmitter may transition to the latching fault state 560.

The wireless power transmitter in the latching fault state 560 may transition to either the configuration state 510 or the power save state 520 upon determining that all connected wireless power receivers have been removed from the charging area.

In addition, when a local fault is sensed in the latching fault state 560, the wireless power transmitter may transition to the local fault state 550. Here, the wireless power transmitter in the local fault state 550 may transition back to the latching fault state 560 when the local fault is released.

On the other hand, in the case where the wireless power transmitter transitions from any one state among the configuration state 510, the power save state 520, the low power state 530, and the power transfer state 540 to the local fault state 550, the wireless power transmitter may transition to the configuration state 510 once the local fault is released.

The wireless power transmitter may interrupt the power supplied to the wireless power transmitter once it transitions to the local fault state 550. For example, the wireless power transmitter may transition to the local fault state 550 when a fault such as overvoltage, overcurrent, or overheating is sensed. However, embodiments are not limited thereto.

In one example, the wireless power transmitter may transmit, to at least one connected wireless power receiver, a predetermined power control command for reducing the intensity of power received by the wireless power receiver when overcurrent, overvoltage, or overheating is sensed.

In another example, the wireless power transmitter may transmit, to at least one connected wireless power receiver, a predetermined control command for stopping charging of the wireless power receiver when overcurrent, overvoltage, or overheating is sensed.

Through the above-described power control procedure, the wireless power transmitter may prevent damage to the device due to overvoltage, overcurrent, overheating, or the like.

If the intensity of the output current of the transmission resonator is greater than or equal to a reference value, the wireless power transmitter may transition to the latching fault state 560. The wireless power transmitter that has transitioned to the latching fault state 560 may attempt to make the intensity of the output current of the transmission resonator less than or equal to a reference value for a predetermined time. Here, the attempt may be repeated a predetermined number of times. If the latching fault state 560 is not released despite repeated execution, the wireless power transmitter may send, to the user, a predetermined notification signal indicating that the latching fault state 560 is not released, using a predetermined notification means. In this case, when all of the wireless power receivers positioned in the charging area of the wireless power transmitter are removed from the charging area by the user, the latching fault state 560 may be released.

On the other hand, if the intensity of the output current of the transmission resonator falls below the reference value within a predetermined time, or if the intensity of the output current of the transmission resonator falls below the reference value during the predetermined repetition, the latching fault state 560 may be automatically released. In this case, the wireless power transmitter may automatically transition from the latching fault state 560 to the power save state 520 to perform the sensing and identification procedure for a wireless power receiver again.

The wireless power transmitter in the power transfer state 540 may transmit continuous power and adaptively control the transmit power based on the state information on the wireless power receiver and predefined optimal voltage region setting parameters.

For example, the predefined optimal voltage region setting parameters may include at least one of a parameter for identifying a low voltage region, a parameter for identifying an optimum voltage region, a parameter for identifying a high voltage region, and a parameter for identifying an overvoltage region.

The wireless power transmitter may increase the transmit power if the power reception state of the wireless power receiver is in the low voltage region, and reduce the transmit power if the power reception state is in the high voltage region.

The wireless power transmitter may also control the transmit power to maximize the power transmission efficiency.

The wireless power transmitter may also control the transmit power such that the deviation of the power required by the wireless power receiver is less than or equal to a reference value.

In addition, the wireless power transmitter may stop transmitting power when the output voltage of the rectifier of the wireless power receiver reaches a predetermined overvoltage region-namely, when overvoltage is sensed.

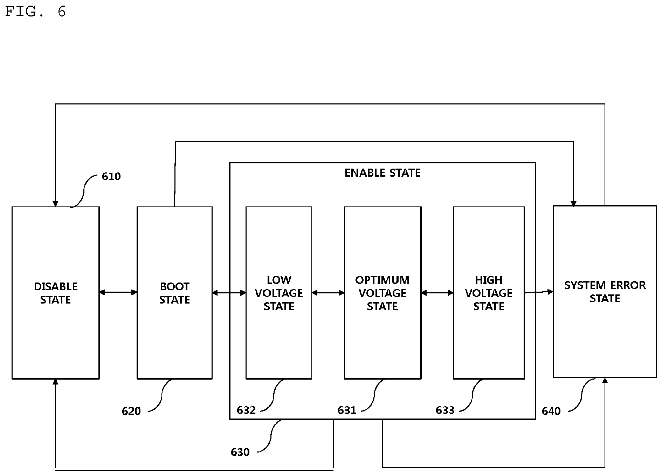

FIG. 6 is a state transition diagram illustrating a wireless power receiver according to an embodiment of the present disclosure.

Referring to FIG. 6, the states of the wireless power receiver may include a disable state 610, a boot state 620, an enable state 630 and a system error state 640.

The state of the wireless power receiver may be determined based on the intensity of the output voltage at the rectifier end of the wireless power receiver (hereinafter referred to as V_{RECT} for simplicity) .

The enable state 630 may be divided into an optimum voltage 631, a low voltage state 632 and a high voltage state 633 by the value of V_{RECT}.

The wireless power receiver in the disable state 610 may transition to the boot state 620 if the measured value of V_{RECT} is greater than or equal to the predefined value of V_{RECT_BOOT}.

In the boot state 620, the wireless power receiver may establish an out-of-band communication link with a wireless power transmitter and wait until the value of V_{RECT} reaches the power required at the load stage.

When it is sensed that the value of V_{RECT} has reached the power required at the load stage, the wireless power receiver in the boot state 620 may transition to the enable state 630 and begin charging.

The wireless power receiver in the enable state 630 may transition to the boot state 620 upon sensing that charging is completed or interrupted.

In addition, the wireless power receiver in the enable state 630 may transition to the system error state 640 when a predetermined system error is sensed. Here, the system error may include overvoltage, overcurrent, and overheating, as well as other predefined system error conditions.

In addition, the wireless power receiver in the enable state 630 may transition to the disable state 610 if the value of V_{RECT} falls below the value of V_{RECT_BOOT}.

In addition, the wireless power receiver in the boot state 620 or the system error state 640 may transition to the disable state 610 if the value of V_{RECT} falls below the value of V_{RECT_BOOT}.

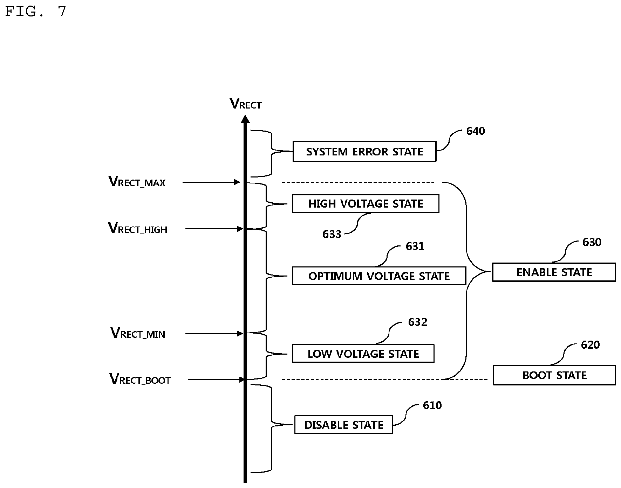

Hereinafter, state transition of the wireless power receiver in the enable state 630 will be described in detail with reference to FIG. 7.

FIG. 7 illustrates operation regions of a wireless power receiver according to V_{RECT} according to an embodiment of the present disclosure.

Referring to FIG. 7, if the value of V_{RECT} is less than a predetermined value of V_{RECT_BOOT}, the wireless power receiver is maintained in the disable state 610.

Thereafter, when the value of V_{RECT} is increased beyond V_{RECT_BOOT}, the wireless power receiver may transition to the boot state 620 and broadcast an advertisement signal within a predetermined time. Thereafter, when the advertisement signal is sensed by the wireless power transmitter, the wireless power transmitter may transmit, to the wireless power receiver, a predetermined connection request signal for establishing an out-of-band communication link.

Once the out-of-band communication link is normally established and successfully registered, the wireless power receiver may wait until the value of V_{RECT} reaches the minimum output voltage of the rectifier for normal charging (hereinafter referred to as V_{RECT_MIN} for simplicity) .

If the value of V_{RECT} exceeds V_{RECT_MIN}, the wireless power receiver may transition from the boot state 620 to the enable state 630 and may begin charging the load.

If the value of V_{RECT} in the enable state 630 exceeds a predetermined reference value V_{RECT_MAX} for determining overvoltage, the wireless power receiver may transition from the enable state 630 to the system error state 640.

Referring to Figure 7, the enable state 630 may be divided into the low voltage state 632, the optimum voltage 631 and the high voltage state 633 according to the value of V_{RECT}.

The low voltage state 632 may refer to a state in which V_{RECT_BOOT} ≤ V_{RECT} ≤ V_{RECT_MIN}, the optimum voltage state 631 may refer to a state in which V_{RECT_MIN} < V_{RECT} ≤ V_{RECT_HIGH}, and the high voltage state 633 may refer to a state in which V_{RECT_HIGH} < V_{RECT} ≤ V_{RECT_MAX}.

In particular, the wireless power receiver having transitioned to the high voltage state 633 may suspend the operation of cutting off the power supplied to the load for a predetermined time (hereinafter referred to as a high voltage state maintenance time for simplicity). The high voltage state maintenance time may be predetermined so as not to cause damage to the wireless power receiver and the load in the high voltage state 633.

When the wireless power receiver transitions to the system error state 640, it may transmit a predetermined message indicating occurrence of overvoltage to the wireless power transmitter through the out-of-band communication link within a predetermined time.

The wireless power receiver may also control the voltage applied to the load using an overvoltage interruption means provided to prevent damage to the load due to overvoltage in the system fault state 630. Here, an ON/OFF switch and/or a Zener diode may be used as the overvoltage interruption means.

Although a method and means for coping with a system error in a wireless power receiver when overvoltage is generated and the wireless power receiver transitions to the system error state 640 have been described in the above embodiment, this is merely an embodiment. In other embodiments, the wireless power receiver may transition to the system error state due to overheating, overcurrent, and the like.

As an example, in the case where the wireless power receiver transitions to the system error state due to overheating, the wireless power receiver may transmit a predetermined message indicating the occurrence of overheating to the wireless power transmitter. In this case, the wireless power receiver may drive a cooling fan or the like to reduce the internally generated heat.

According to another embodiment of the present disclosure, a wireless power receiver may receive wireless power in operative connection with a plurality of wireless power transmitters. In this case, the wireless power receiver may transition to the system error state 640 upon determining that the wireless power transmitter from which the wireless power receiver is determined to actually receive wireless power is different from the wireless power transmitter with which the out-of-band communication link is actually established.

Hereinafter, a procedure of signaling between a wireless power transmitter and a wireless power receiver according to the present disclosure will be described in detail with reference to the drawings.

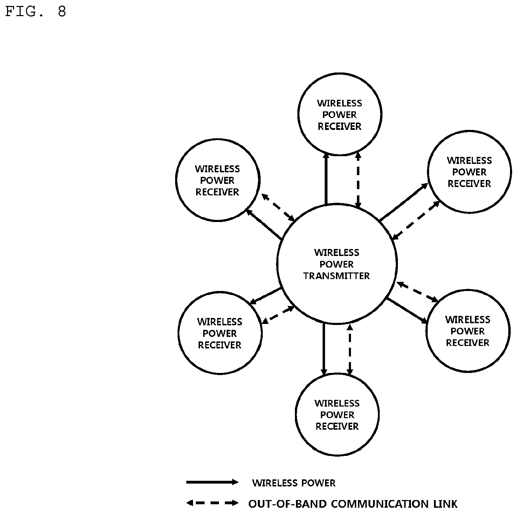

FIG. 8 is a configuration diagram of a wireless power transmission system according to an embodiment of the present disclosure.

As shown in FIG. 8, a wireless power transmission system may be configured by star topology, and a wireless power transmitter may collect various kinds of characteristics information and state information from a wireless power receiver over an out-of-band communication link, and control operation and transmit power of the wireless power receiver based on the collected information.

The wireless power transmitter may also transmit the characteristics information thereabout and a predetermined control signal to the wireless power receiver over the out-of-band communication link.

The wireless power transmitter may also determine the order of power transmissions to the connected wireless power receivers and may transmit the wireless power according to the determined order of power transmission. For example, the wireless power transmitter may determine the order of power transmissions based on at least one of the priorities of the wireless power receivers, power reception efficiencies of the wireless power receivers or the power transmission efficiency of the wireless power transmitter, the charging states of the wireless power receivers, and information indicating whether a system error has occurred in the wireless power receivers.

The wireless power transmitter may also determine the power transmitted for each connected wireless power receiver. For example, the wireless power transmitter may calculate the power to be transmitted to each wireless power receiver based on the currently available power and the power reception efficiency of each of the wireless power receivers, and transmit information about the calculated power to the wireless power receivers over a predetermined control message.

The wireless power transmitter may also generate and provide a time synchronization signal to the wireless power receiver to obtain time synchronization with the network-connected wireless power receiver(s). Here, the time synchronization signal may be transmitted through a frequency band for wireless power transmission, that is, an in-band, or a frequency band for out-of-band communication, that is, an out-of-band. The wireless power transmitter and the wireless power receiver may manage the communication timing and communication sequence of each other based on the time synchronization signal.

While FIG. 8 illustrates a configuration in which a wireless power transmission system including one wireless power transmitter and a plurality of wireless power receivers is networked in star topology, this is only an embodiment. In a wireless power transmission system according to another embodiment of the present disclosure, a plurality of wireless power transmitters and a plurality of wireless power receivers may be network-connected to transmit and receive wireless power. In this case, the wireless power transmitters may exchange the state information thereabout over a separate communication channel. In addition, if a wireless power receiver is a mobile device, the wireless power receiver may receive seamless power during movement through handover between the wireless power transmitters.

The wireless power transmitter may operate as a network coordinator and may exchange information with the wireless power receiver over an out-of-band communication link. For example, the wireless power transmitter may receive various kinds of information of the wireless power receiver to generate and manage a predetermined device control table, and may transmit network management information to the wireless power receiver with reference to the device control table. This allows the wireless power transmitter to create and maintain a wireless power transmission system network.

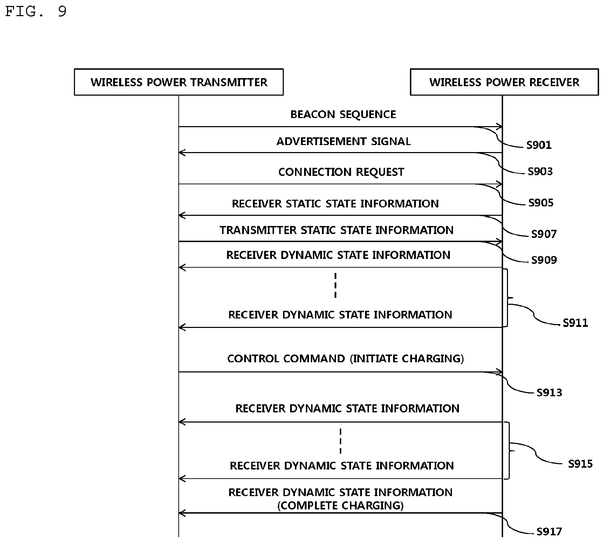

FIG. 9 is a flowchart illustrating a wireless charging procedure according to an embodiment of the present disclosure.

Referring to FIG. 9, the wireless power transmitter may generate a beacon sequence and transmit the beacon sequence through a transmission resonator when configuration of a wireless power transmitter, namely, booting, is completed (S901).

Upon sensing the beacon sequence, the wireless power receiver may broadcast an advertisement signal including the identification information and characteristics information thereabout (S903). Here, it should be noted that the advertisement signal can be repeatedly transmitted with a predetermined periodicity until a connection request signal, which will be described later, is received from the wireless power transmitter.

Upon receiving the advertisement signal, the wireless power transmitter may transmit a predetermined connection request signal for establishing an out-of-band communication link to the wireless power receiver (S905).

Upon receiving the connection request signal, the wireless power receiver may establish an out-of-band communication link and transmit static state information thereabout over the established out-of-band communication link (S907).

Here, the static state information about the wireless power receiver may include at least one of category information, hardware and software version information, maximum rectifier output power information, initial reference parameter information for power control, information for identifying equipment of a power adjustment function, information about a supportable out-of-band communication scheme, and information about a supportable power control algorithm.

Upon receiving the static state information about the wireless power receiver, the wireless power transmitter may transmit the static state information to the wireless power receiver over the out-of-band communication link (S909).

Here, the static state information about the wireless power transmitter may include at least one of transmit power information, class information, hardware and software version information, information about the maximum number of connectable wireless power receivers, and/or information about the number of currently connected wireless power receivers.

Thereafter, the wireless power receiver may monitor its own real-time power reception state and charging state and may transmit the dynamic state information to the wireless power transmitter periodically or when a specific event occurs (S911).

Here, the dynamic state information about the wireless power receiver may include at least one of information about the rectifier output voltage and current, information about the voltage and current applied to a load, information about the measured temperature of the inside of the wireless power receiver, reference parameter change information for power control, charging state information, and system error information.

In addition, when sufficient power for charging the wireless power receiver is prepared, the wireless power transmitter may send a predetermined control command over the out-of-band communication link to control the wireless power receiver to start the charging operation (S913).

Thereafter, the wireless power transmitter may receive dynamic state information from the wireless power receiver and dynamically control the transmit power (S915).

In addition, when an internal system error is sensed or the charging is completed, the wireless power receiver may transmit dynamic state information to the wireless power transmitter, including data for identifying a corresponding system error and/or data indicating that charging is complete (S917). Here, the system error may include overcurrent, overvoltage, and overheating.

According to another embodiment of the present disclosure, when a currently available power cannot meet the required power of all the connected wireless power receivers, the wireless power transmitter may redistribute the power to be transmitted to the respective wireless power receivers, and transmit the redistributed power to the corresponding wireless power receiver.

In addition, when a new wireless power receiver is registered during wireless charging, the wireless power transmitter may redistribute the power to be received by the respective connected wireless power receivers based on the currently available power and transmits the same to the corresponding wireless power receivers through a predetermined control command.

In addition, when charging of a connected wireless power receiver is completed or the out-of-band communication link is released (for example, when the wireless power receiver is removed from the charging area) during wireless charging, the wireless power transmitter may redistribute the power to be received by the other wireless power receivers and transmit the same to the corresponding wireless power receivers through a predetermined control command.

The wireless power transmitter may also check, through a predetermined control procedure, whether a wireless power receiver is equipped with a power control function. In this case, when the power redistribution situation occurs, the wireless power transmitter may perform power redistribution only for the wireless power receiver equipped with the power control function.

For example, when a new wireless power receiver is a registered, the wireless power transmitter may determine whether it can provide the power required by the wireless power receiver, based on the available power of the wireless power transmitter. If the required power exceeds the available power as a result of the determination, the wireless power transmitter may check whether or not the corresponding wireless power receiver is equipped with the power control function. If the corresponding wireless power receiver is equipped with the power control function as a result of checking, the wireless power receiver may determine the power that the wireless power receiver will receive in the range of the available power, and may transmit the determined result to the wireless power receiver through a predetermined control command.

Of course, the power redistribution may be performed within a range within which the wireless power transmitter and the wireless power receiver can operate normally and/or within a range within which normal charging is possible.

According to another embodiment of the present disclosure, a wireless power receiver may support a plurality of out-of-band communication schemes. When the currently established out-of-band communication link is to be changed to another scheme, the wireless power receiver may transmit a predetermined control signal to the wireless power transmitter to request change of out-of-band communication. Upon receiving the out-of-band communication change request signal, the wireless power transmitter may release the currently established out-of-band communication link and establish a new out-of-band communication link in the out-of-band communication scheme requested by the wireless power receiver.

For example, the out-of-band communication schemes applicable to the present disclosure may include at least one of near field communication (NFC), radio frequency identification (RFID), Bluetooth Low Energy (BLE), Wideband Code Division Multiple Access (WCDMA), Long Term Evolution (LTE)/LTE-Advanced, and Wi-Fi.

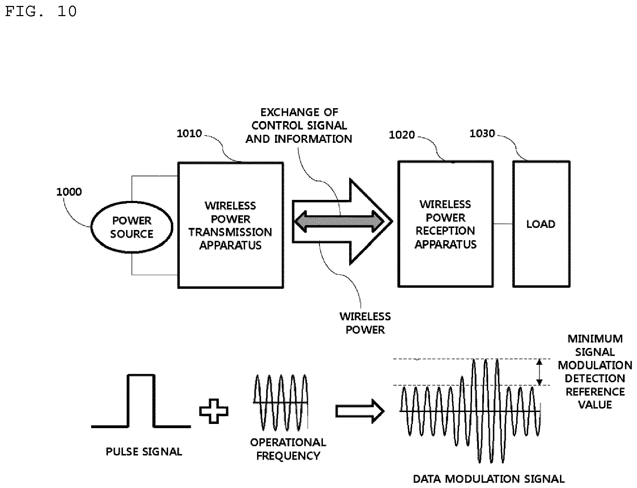

FIG. 10 is a diagram illustrating a wireless power transmission system of an electromagnetic induction scheme according to an embodiment of the present disclosure.

Referring to FIG. 10, the electromagnetic induction type wireless power transmission system may include a power source 1000, a wireless power transmission apparatus 1010, a wireless power reception apparatus 1020, and a load 1030.

The power source 1000 may be included and configured in the wireless power transmission apparatus 1010.

The wireless power transmission apparatus 1010 and the wireless power reception apparatus 1020 may include a plurality of wireless power transmission means.

In addition, the wireless power transmission apparatus 1010 and the wireless power reception apparatus 1020 may perform in-band communication in which the frequency band used to exchange control signals and state information is the same as the frequency band used for wireless power transmission. Here, the in-band communication may be implemented by one of or a combination of at least one of a pulse width modulation scheme, an amplitude modulation scheme, a frequency modulation scheme, a phase modulation scheme and a resistive or capacitive load modulation scheme.

For example, the wireless power reception apparatus 1020 switches on/off the current induced through the reception coil in a predetermined pattern to generate a feedback signal to transmit various control signals and state information.

In another example, the wireless power transmission apparatus 1010 may detect whether voltage change of the feedback power signal received through a specific operational frequency band is greater than or equal to a predetermined minimum signal modulation detection reference value to determine whether or not the data has been modulated in the power signal. Here, the phase change of a specific operational frequency during the data modulation period should be maintained within a predetermined minimum phase shift detection reference value. In particular, it should be noted that the minimum signal modulation detection reference value and the minimum phase shift detection reference value may be differently applied based on the type of wireless power transmission apparatus 1010 and the length of the data modulation period.

The wireless power transmission apparatus 1010 may transmit a control signal and state information to the wireless power reception apparatus 1020 by transmitting a pulse pattern corresponding to a predefined symbol in the operational frequency band. Similarly, the wireless power reception apparatus 1010 may also transmit a control signal and state information to the wireless power transmission apparatus 1020 by transmitting a pulse pattern corresponding to a predefined symbol in an operational frequency band. That is, data encoding in the electromagnetic inductive wireless power transmission scheme may be performed based on frequency modulation of the pulse signal. Here, a specific pulse pattern may correspond to a specific data symbol, and various data symbols may be defined based on the pulse width, the spacing between pulses, and the like.

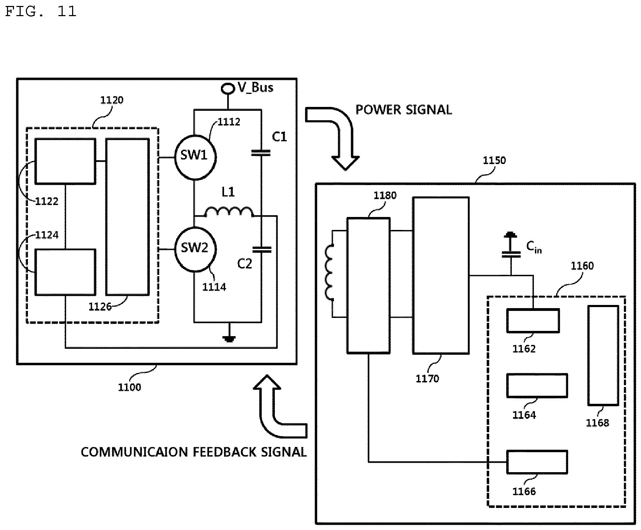

FIG. 11 is a diagram illustrating a wireless charging system of an electromagnetic induction scheme according to another embodiment of the present disclosure.

Referring to FIG. 11, the wireless charging system includes a wireless charging transmission apparatus 1100 and a wireless charging reception apparatus 1150. For example, when a mobile apparatus including the wireless charging reception apparatus 1150 is placed in the charging area of the wireless charging transmission apparatus 1100, the coils of the wireless charging transmission apparatus 1100 and the wireless charging reception apparatus 1150 may be connected by electromagnetic induction.

The wireless charge transmission apparatus 1100 may modulate the signal and change the frequency to control delivery of the power signal. The wireless charging reception apparatus 1150 may control the output voltage and control the received power by demodulating the power signal according to the protocol set to be suitable for the wireless communication environment. In addition, the wireless charging transmission apparatus 1100 may increase or decrease the power delivered from the wireless charging transmission apparatus 1100 to the wireless charging reception apparatus 1150 by controlling the operational frequency.

The power(or increase/decrease) to be transmitted may be controlled using a feedback signal transmitted from the wireless charging reception apparatus 1150 to the wireless charging transmission apparatus 1100.

The protocol set in the electromagnetic induction scheme may use a frequency-based signal transmission scheme. Here, the set protocol may include information for identifying the wireless charging reception apparatus 1150 and information indicating completion of charging.

The wireless charging transmission apparatus 1100 may include a signal generator 1120 for generating a power signal according to a predefined protocol, a coil L1 and capacitors C1 and C2 placed between a power supply end V_Bus and GND to sense a feedback signal delivered from the wireless charging reception apparatus 1150, and a first switch 1112 and a second switch 1114 which are operated by the signal generator 1120.

The signal generator 120 may include a demodulator 1124 for demodulating the feedback signal delivered through the coil L1, a frequency drive unit 1126 for changing the frequency, and a controller 1122 for controlling the demodulator 1124 and the frequency drive unit 1126. The feedback signal transmitted through the coil L1 is demodulated and then input to the controller 1122. The feedback signal delivered through the coil L1 may be demodulated and input to the controller 1122, and the controller 1122 may control the frequency driving unit 1126 to change the frequency of a power signal delivered to the coil L1.

The wireless charging reception apparatus 1150 includes a modulator 1180 for transmitting a feedback signal through a coil, a rectifier 1170 for rectifying, on the basis of frequency, a power signal delivered through the coil, a modulator 1180, and a communication & control unit 160 for controlling the modulator 1180 and the rectifier 1170.

The communication & control unit 1160 includes a power supply 1162 for supplying power to the rectifier 1170, a conversion unit 1164 for adjusting the power signal delivered through the rectifier to meet the charging requirements of the charging target, a charging output unit 1168 for outputting the converted power, and a feedback communication unit 1166 for generating a feedback signal by identifying the state of the charging target. Here, the conversion unit 1164 may include a DC-DC converter for converting an input DC power into a DC power of another level.

The wireless charging system of the electromagnetic induction scheme may operate in a standby state, a signal detection (ping) state, an identification state, a power transfer state, or an end-of-charge state. Switching between different operation states may be performed according to the result of communication between the wireless charging reception apparatus and the wireless charging transmission apparatus. For the wireless charging transmission apparatus, switching from an operation state to the standby state may be performed according to a separate internal control method.

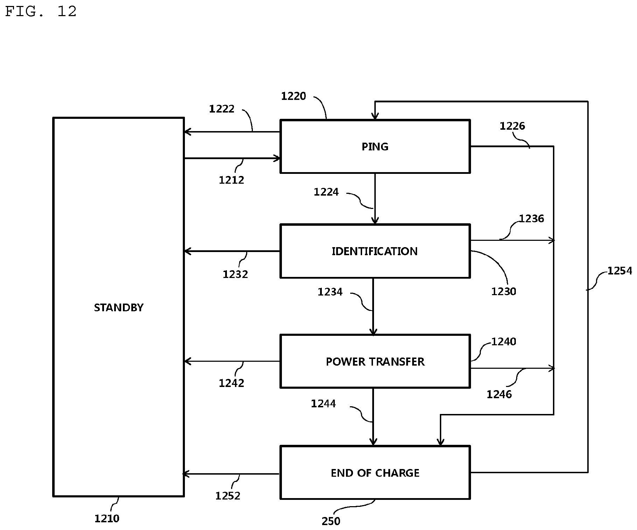

Operations controlled by communication between the wireless charging reception apparatus and the wireless charging transmission apparatus will be described in detail with reference to the state transition diagrams shown in FIGs. 12 to 13.

FIG. 12 is a state transition diagram for explaining the operation of a wireless charging transmitter supporting an electromagnetic induction method according to an embodiment of the present disclosure.

Referring to FIG. 12, in the standby state 1210, the wireless charging transmission apparatus monitors whether a rechargeable reception apparatus is located on the charging surface. A method such as a magnetic field, capacitance, or inductance may be used to monitor the rechargeable reception apparatus. When the rechargeable reception apparatus is detected, the wireless charging transmission apparatus may transition from the standby state 1210 to the signal detection state 1220 (step 1212).

In the signal detection state 1220, the wireless charging transmission apparatus may connect to the rechargeable reception apparatus and perform a function to check if the reception apparatus supports a valid wireless charging technology. In the signal detection state 1220, the wireless power transmitter may also perform a function to identify other devices that generate dark current (parasitic current) (e.g., a metal object such as a coin).

The wireless charging transmission apparatus may send a digital ping having a structure according to a preset frequency and time to identify and connect to a rechargeable reception device. If a sufficient power signal is transferred from the wireless charging transmission apparatus to the wireless charging reception apparatus, the wireless charging reception apparatus may respond by modulating the power signal according to a protocol set in the electromagnetic induction scheme. When the wireless charging transmission apparatus receives a predefined valid signal according to the corresponding wireless charging technology, the wireless charging transmission apparatus may transition from the signal detection state 1220 to the identification state 1230 without interrupting transmission of the power signal (step 1224). A wireless charging transmission apparatus that does not support the operation in the identification state 1230 may switch immediately from the signal detection state 1220 to the power transfer state 1240 (1224, 1234). In other words, it should be noted that the operation in the identification state 1230 may be selectively included in the wireless charging transmission apparatus.

When the wireless charging transmission apparatus receives an end-of-charge signal from the wireless charging reception apparatus, the wireless charging transmission apparatus may transition from the signal detection state 1220 to the end-of-charge state 1250 (step 1226).

If no signal from the wireless charging reception apparatus is sensed, the wireless charging transmission apparatus may interrupt transmission of the power signal and return to the standby state 1210 (step 1222).

Each wireless charging reception apparatus may maintain unique identification information, and should inform the wireless charging transmission apparatus, through a predetermined control signal, that the wireless charging reception apparatus is a rechargeable device upon receiving the digital ping. To perform such identification operation, the wireless charging reception apparatus may transmit unique identification information thereof to the wireless charging transmission apparatus.

A wireless charging transmission apparatus supporting the identification state 1230 may determine validity of the unique identification information sent from the wireless charging reception apparatus. If it is determined that the unique identification information is valid, the wireless charging transmission apparatus may transition from the identification state 1230 to the power transfer state 1240 (step 1236). If the unique identification information is not valid or validity is not determined within a predetermined time, the wireless charging transmission apparatus may interrupt transmission of the power signal and transition to the standby state 1210 (step 1232).

The wireless charging transmitter in the power transfer state 1240 may control a current flowing through a primary cell, i.e., the transmission induction coil, according to predetermined control information received from the wireless charging reception apparatus to supply a power signal to the wireless charging reception apparatus. In addition, the wireless charging transmission apparatus may verify that there is no violation of an acceptable operation region and tolerance limit that may arise due to, for example, detection of a new apparatus.

When an end-of-charge signal is received from the wireless charging reception apparatus, the wireless charging transmission apparatus may interrupt transmission of the power signal and transition to the end-of-charge state 1250 (1246). In addition, if the temperature exceeds a predetermined value during operation, the wireless charging transmission apparatus may interrupt transmission of the power signal and transition to the end-of-charge state 1250 (1244).

In addition, if a system error is sensed in the power transfer state 1240, the wireless charging transmission apparatus may interrupt transmission of the power signal and transition to the standby state 1210 (1242). Of course, it should be noted that, if a system error is sensed in the signal detection state 1220 and the identification state 1230, the wireless charge transmission apparatus may transition to the standby state 1210.

As described above, the wireless charging transmission apparatus may transition to the end-of-charge state 250 when the end-of-charge signal is input from the wireless charging reception apparatus or the temperature exceeds a predetermined range during operation.

If transition to the end-of-charge state 1250 is caused by an end-of-charge signal, the wireless charging transmission apparatus may interrupt transmission of the power signal and wait for a certain time. Here, the certain time may vary depending on components such as coils provided in the wireless charging transmission apparatus, the range of the charging area, the allowable limit of the charging operation, or the like, in order to transmit the power signal in the electromagnetic induction scheme. After a certain time elapses, the wireless charging transmission apparatus may transition to the signal detection state 1220 to connect to the wireless charging reception apparatus positioned on the surface thereof (step 1254). The wireless charging transmission apparatus may also monitor the charging-allowed region for a certain time to recognize whether the wireless power reception apparatus is removed. If it is sensed that the wireless power reception apparatus has been removed from the charging-allowed region, the wireless power transmission apparatus may transition to the standby state 1210 (step 1252).

If transition to the end-of-charge state 1250 occurs due to the temperature of the wireless charging transmission apparatus, the wireless charging transmission apparatus may interrupt the power signal and monitor the temperature. If the temperature falls within a certain range or to a certain value, the wireless charging transmission apparatus may transition to the signal detection state 1220 (step 1254). It should be noted that the temperature range or value for transitioning the state of the wireless charging transmission apparatus may vary depending on the technology and method for manufacturing the wireless charging transmission apparatus. While monitoring change in temperature, the wireless charging transmission apparatus may monitor the charging-allowed region to recognize if the wireless power reception apparatus is removed. When the wireless power reception apparatus is removed from the charging surface, the wireless charging transmission apparatus may transition to the standby state 1210 (step 1252) .

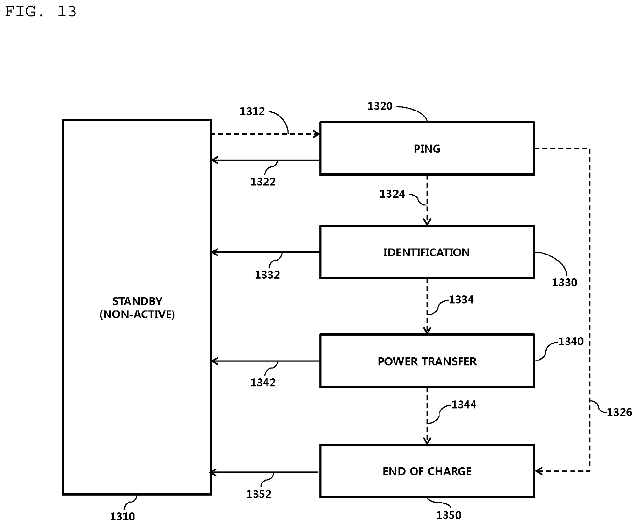

FIG. 13 is a state transition diagram illustrating the operation of a wireless charging reception apparatus supporting an electromagnetic induction scheme according to an embodiment of the present disclosure.

Referring to FIG. 13, the states of the wireless charging reception apparatus may include a standby state 1310, a signal detection (ping) state 1320, an identification state 1330, a power transfer state 1340, and an end-of-charge state 350, as in the case of the wireless charging transmission apparatus of FIG. 12.

Unlike the wireless charging transmission apparatus, the wireless charging reception apparatus in the standby state 1310 may be in a non-active state. For example, in the case of a mobile wireless charging reception apparatus, the wireless charging function may be deactivated depending on the use and settings of the user device.

When a power signal sent by the wireless power transmission apparatus is sensed, the wireless charging reception apparatus may transition from the standby state 1310 to the signal detection state 1320 (step 1312). At this time, if reception of the power signal is interrupted, the wireless charging reception apparatus may return from the signal detection state 1320 to the standby state 1310(step 1320) . The wireless charging reception apparatus may transition to an end-of-charge state 1350 when at least one of the predefined charge completion requirements is met in the signal detection state 1320 (step 1326). When a certain time elapses after a response to the digital ping of the wireless charging transmission apparatus, the wireless charging reception apparatus may transition from the signal detection state 1320 to the identification state 330.

In the identification state 1330, the wireless charging reception apparatus may check if reception of the power signal is interrupted. If reception of the power signal is interrupted, the wireless charging reception apparatus transitions from the identification state 1330 to the standby state 310 (step 1332).

When a predetermined time elapses without interruption of reception of the power signal in the identification state 330, the wireless charging reception apparatus may transition to the power transfer state 1340 (step 1334).

The wireless charging reception apparatus may receive the power signal in the power transfer state 1340 until at least one of the charging completion requirements is met. When a charging completion requirement is met, the wireless charging reception apparatus may transition to the end-of-charge state 350 (step 1344). If reception of the power signal is interrupted in the power transfer state 1340, the wireless charging reception apparatus may transition to the standby state 1310 (step 1342).

When the power signal is interrupted, the wireless charging reception apparatus in the end-of-charge state 1350 may transition to the standby state 1310 (step 1352).

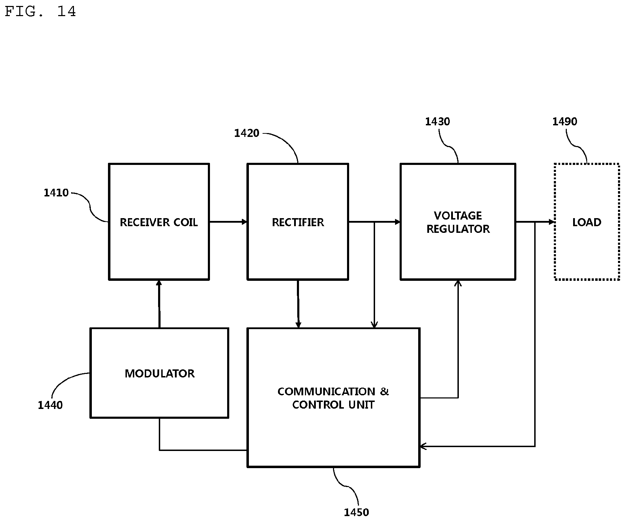

FIG. 14 is a block diagram illustrating an internal structure of a wireless charging reception apparatus supporting an electromagnetic induction scheme according to an embodiment of the present disclosure.

Referring to FIG. 14, the wireless charging reception apparatus may include a receiver coil 1410, a rectifier 1420, a voltage controller 1430, a modulator 1440, and a communication & control unit 1450.

The receiver coil 1410 may include a secondary coil that may constitute a resonant circuit. In order to enhance power transmission efficiency, a capacitor may be selectively connected in series or parallel to the receiver coil 1410.

The rectifier 1420 may function to perform full-wave rectification on an AC signal input through a coil to convert the AC signal into a DC signal.

The voltage controller 1430 may convert the output of the rectifier 1420 into a DC signal of a charging-allowed level. The voltage controller 1430 may adjust the magnitude of voltage or the amount of current of the DC signal input to the connected load 1490 in accordance with the voltage level required by the charging target and/or the current state of the charging target.

The communication & control unit 1450 may monitor the charging target to control the charging process and to control the operation of the modulator 1440 on behalf of communication with the wireless charging transmission apparatus. In addition, the communication & control unit 1450 may monitor and control an accompanying operation environment necessary for a normal operation of the wireless charging reception apparatus.

The modulator 1440 typically includes a resistor and a capacitor, and may receive information about the state of the charging process or the result of charging from the communication & control unit 1450 and perform modulation to deliver the information to the wireless charging transmission apparatus. Here, any one of the pulse width modulation scheme, the frequency modulation scheme, and the phase modulation scheme may be used for the modulation operation.

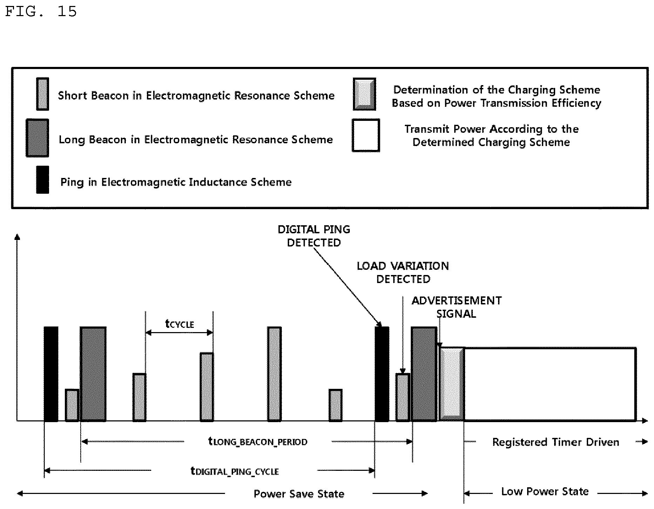

FIG. 15 illustrates a wireless power transmission method in a wireless power transmission apparatus supporting a plurality of wireless power transmission schemes according to an embodiment of the present disclosure.

Referring to FIG. 15, the wireless power transmission apparatus may initiate a digital ping transmission step of transmitting a digital ping signal defined in an electromagnetic induction scheme on a predetermined cycle t_{DIGITAL_PING_CYCLE} in a power save mode.

Subsequently, the wireless power transmission apparatus may initiate a beacon transmission step of transmitting a short beacon signal and a long beacon signal defined in the electromagnetic resonance scheme on a predetermined cycle, respectively.

When the digital ping signal is sensed, the wireless power reception apparatus may measure a receive power intensity of the sensed digital ping signal and transmit information about the measured receive power intensity to the wireless power transmission apparatus through in-band communication. Then, the wireless power transmission apparatus may store and maintain the information about the receive power intensity of the digital ping signal in a predetermined internal recording area.

When the long beacon signal is sensed, the wireless power reception apparatus may measure the receive power intensity of the sensed long beacon and transmit information about the measured receive power intensity of the long beacon to the wireless power transmission apparatus over a configured out-of-band communication channel.

The wireless power transmission apparatus may calculate the power transmission efficiency based on the pre-known transmit power intensity of the digital ping signal and the pre-stored receive power intensity of the digital ping signal. Hereinafter, for simplicity, the power transmission efficiency calculated according to the electromagnetic induction scheme will be referred to as inductive power transmission efficiency.

The wireless power transmission apparatus may calculate power transmission efficiency based on the pre-known transmit power intensity of the long beacon signal and the receive power intensity of the long beacon signal received from the wireless power reception apparatus.

Hereinafter, for simplicity, the power transmission efficiency calculated according to the electromagnetic resonance scheme will be referred to as resonant power transmission efficiency.

The wireless power transmission apparatus may determine a wireless power transmission scheme or wireless charging scheme having the optimum power transmission efficiency by comparing the calculated inductive power transmission efficiency with the calculated resonant power transmission efficiency. Subsequently, the wireless power transmission apparatus may transmit wireless power to the wireless power reception apparatus through the determined wireless charging scheme.

At this time, the wireless power transmission apparatus may notify the wireless power reception apparatus of the determined wireless charging scheme through in-band or out-of-band communication.

According to an embodiment of the present disclosure, the wireless power reception apparatus may transmit not only the receiver identification and state information but also information on the receive power intensity of the long beacon signal to the wireless power transmission apparatus over an advertisement signal.

In addition, the wireless power transmission apparatus according to an embodiment of the present disclosure may calculate the power transmission efficiency based on information on the intensity of receive power continuously received within a predefined time, and determine an optimum wireless charging scheme based on the calculated power transmission efficiency. Here, the receive power intensity information may be rectifier output voltage and/or current intensity information of the wireless power receiving end.

Although FIG. 15 illustrates that the wireless power reception apparatus measures the receive power intensity of the long beacon and transmits information about the measured receive power intensity to the wireless power transmission apparatus over the advertisement signal, this is merely an embodiment. According to another embodiment of the present disclosure, the wireless power reception apparatus may measure the receive power intensity when the power received through power control in the low power state is stabilized, and output information about the measured receive power intensity to the wireless power transmission apparatus on a configured out-of-band communication channel.

Although it is illustrated in FIG. 15 that the wireless power transmission apparatus senses presence or absence of a receiver for the first time using a digital ping according to the electromagnetic induction scheme, this is merely an embodiment. According to another embodiment of the present disclosure, the wireless power transmission apparatus may sense presence or absence of a receiver using a short beacon according to the electromagnetic resonance scheme.

When presence of a receiver is sensed through the digital ping of the electromagnetic induction scheme, the wireless power transmission apparatus according to another embodiment of the present disclosure may interrupt transmission of the short beacon of the electromagnetic resonance scheme and perform a control operation to transmit only the long beacon. This may minimize waste of power in the power save mode.

According to an embodiment of the present disclosure, if the rectifier output voltage according to the digital ping and/or the long beacon exceeds a predefined boot voltage reference value, the wireless power reception apparatus may transition to the boot state. The wireless power reception apparatus in the boot state may configure an out-of-band communication link if the out-of-band communication link is not preset. Subsequently, the wireless power reception apparatus may transmit the receive power intensity information about the digital ping and the receive power intensity information about the long beacon to the wireless power transmission apparatus through the out-of-band communication link.

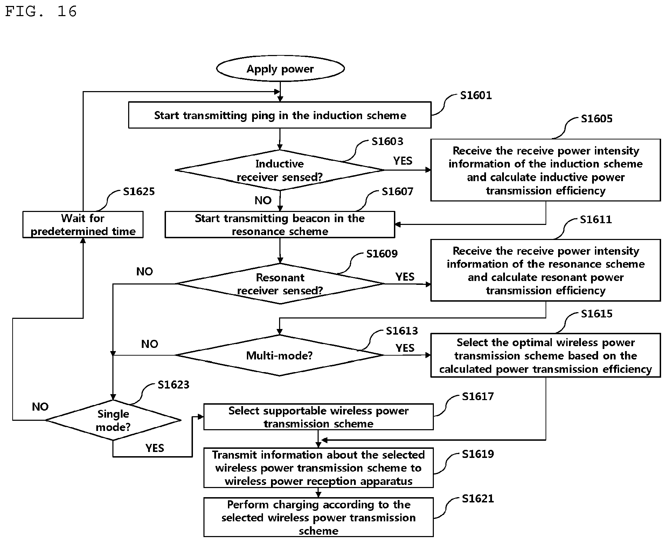

FIG. 16 is a flowchart illustrating a wireless power transmission method in a wireless power transmission apparatus according to an embodiment of the present disclosure.

Referring to FIG. 16, when power is applied to the wireless power transmission apparatus, the wireless power transmission apparatus may start the procedure of transmitting a ping signal according to the inductance scheme (S1601).

According to an embodiment of the present disclosure, the ping signal may be, but is not limited to, a digital ping signal, and the ping signal transmission procedure may further include a predetermined analog ping signal for identifying presence or absence of a receiver.

After ping transmission, the wireless power transmission apparatus may sense whether there is a wireless power reception apparatus supporting the induction scheme by sensing a change in current, voltage, or magnetic field of the transmission induction coil (S1603).

When the receiver supporting the induction scheme is sensed, the wireless power transmission apparatus may receive the receive power intensity information corresponding to the induction scheme through in-band communication and calculate the inductive power transmission efficiency (S1605).

If the receiver supporting the inductance scheme is not sensed within a predetermined time or calculation of the inductive power transmission efficiency is completed, the wireless power transmission apparatus may start the beacon transmission procedure according to the resonance scheme (S1607).

The wireless power transmission apparatus may sense whether there is a receiver supporting the resonance scheme, based on change in current, voltage or magnetic field of the transmission resonance coil (S1609).

When the receiver supporting the resonance scheme is sensed, the wireless power transmission apparatus may receive the receive power intensity information corresponding to the resonance scheme through the out-of-band communication link and calculate the resonant power transmission efficiency (S1611).

The wireless power transmission apparatus may check whether the receiver supports multiple modes, based on the result of sensing in steps 1603 and 1609 (S1613).

If the receiver supports multiple modes as a result of checking, the wireless power transmission apparatus may select an optimal wireless power transmission scheme based on the calculated inductive power transmission efficiency and resonant power transmission efficiency (S1615).

Thereafter, the wireless power transmission apparatus may transmit information about the selected wireless power transmission scheme to the wireless power reception apparatus through the in-band or out-of-band communication link (S1619).

The wireless power transmission apparatus may perform charging by transmitting wireless power using the selected wireless power transmission scheme (S1621).

If the receiver supporting the resonance scheme is not sensed within a predetermined time in step 1609, the wireless power transmission apparatus may check whether the receiver supports a single mode (i.e., the induction scheme) (S1623).

If the receiver supports only the induction scheme as a result of checking, the wireless power transmission apparatus may select the inductance scheme for power transmission to the wireless power reception apparatus and transmit the selection result to the wireless power reception apparatus through in-band communication.

In step 1613, if the receiver does not support multiple modes, the wireless power transmission apparatus may select the resonance scheme for power transmission to the wireless power reception apparatus, and transmit the selection result to the wireless power reception apparatus through the out-of-band communication link.

If the receiver does not support the single mode in step 1623, the wireless power transmission apparatus may remain in the standby state for a predetermined time (S1625), and then perform step 1601 described above.

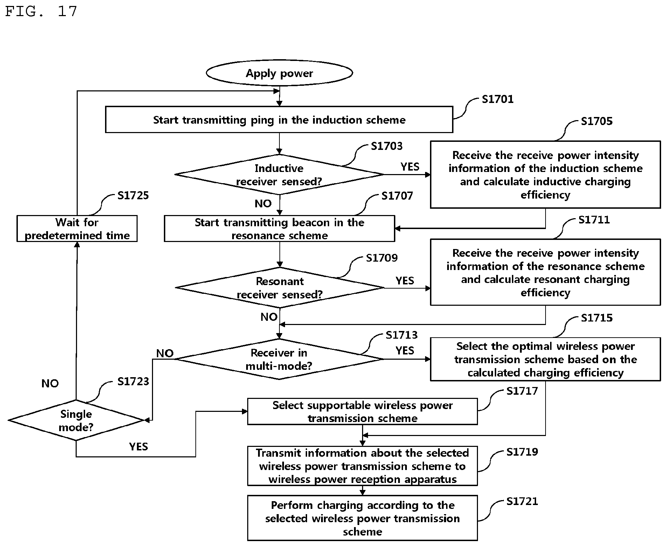

FIG. 17 is a flowchart illustrating a wireless power transmission method in a wireless power transmission apparatus according to another embodiment of the present disclosure.

Referring to FIG. 17, when power is applied to the wireless power transmission apparatus, the wireless power transmission apparatus may start the procedure of transmitting a ping signal according to the inductance scheme (S1701).

According to an embodiment of the present disclosure, the ping signal may be, but is not limited to, a digital ping signal, and the ping signal transmission procedure may further include a predetermined analog ping signal for identifying presence or absence of a receiver.

After ping transmission, the wireless power transmission apparatus may sense whether there is a wireless power reception apparatus supporting the induction scheme by sensing a change in current, voltage, or magnetic field of the transmission induction coil (S1703).

When the receiver supporting the induction scheme is sensed, the wireless power transmission apparatus may receive information on the intensity of power currently applied to the load corresponding to the induction scheme from the wireless power reception apparatus through in-band communication and calculate the inductive charging efficiency (S1705).

If the receiver supporting the inductance scheme is not sensed within a predetermined time or calculation of the inductive charging efficiency is completed, the wireless power transmission apparatus may start the beacon transmission procedure according to the resonance scheme (S1707).

The wireless power transmission apparatus may sense whether there is a receiver supporting the resonance scheme, based on change in current, voltage or magnetic field of the transmission resonance coil (S1709).

When the receiver supporting the resonance scheme is sensed, the wireless power transmission apparatus may receive the information on the intensity of power applied to the load corresponding to the resonance scheme through the out-of-band communication link or the advertisement signal and calculate the resonant charging efficiency (S1711).

The wireless power transmission apparatus may check whether the receiver supports the multi-mode, based on the result of sensing in steps 1703 and 1709 (S1713).

If the receiver supports the multi-mode as a result of checking, the wireless power transmission apparatus may select an optimal wireless power transmission scheme based on the calculated inductive charging efficiency and resonant charging efficiency (S1715).

Thereafter, the wireless power transmission apparatus may transmit information about the selected wireless power transmission scheme to the wireless power reception apparatus through the in-band or out-of-band communication link (S1719).

The wireless power transmission apparatus may perform charging by transmitting wireless power using the selected wireless power transmission scheme (S1721).

If it is determined in step 1713 that the receiver does not support multiple modes, the wireless power transmission apparatus may check whether the receiver supports a single mode, namely, the induction scheme or resonant scheme (S1723).

If the receiver supports the single mode as a result of checking, the wireless power transmission apparatus may select a wireless power transmission scheme supported by the wireless power reception apparatus, and transmit information about the selected wireless power transmission scheme to the wireless power reception apparatus through the in-band communication or out-of-band communication link (S1717 to S1719).

If the receiver does not support the single mode in step 1723, the wireless power transmission apparatus may remain in the standby state for a predetermined time (S1725), and then perform step 1701 described above.

The charging efficiency according to this embodiment may be calculated based on the difference or ratio between the voltage level required by the load and the voltage level applied to the current load.

Here, the voltage level required by the load of the wireless power reception apparatus may be determined based on the pre-collected category information of the wireless power reception apparatus or the characteristics information of the wireless power reception apparatus.

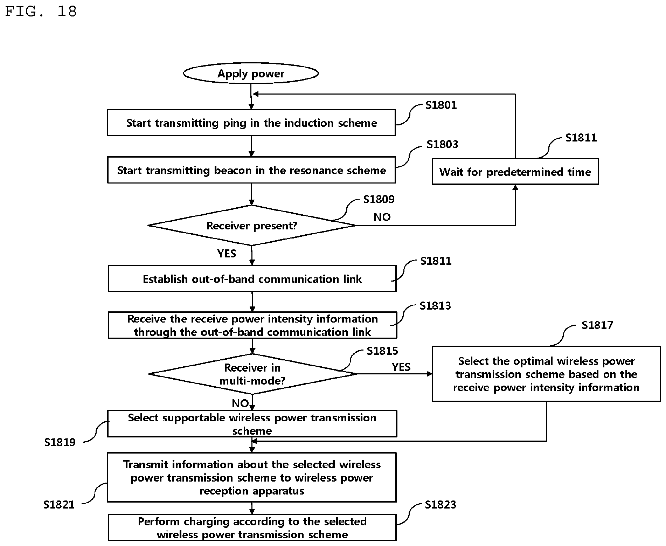

FIG. 18 is a flowchart illustrating a wireless power transmission method in a wireless power transmission apparatus according to another embodiment of the present disclosure.

Referring to FIG. 18, the wireless power transmission apparatus may initiate ping transmission according to the induction scheme and beacon transmission according to the resonance scheme (S1801 to S1803).

It should be noted that the order and/or methods of ping transmission in the induction scheme and beacon transmission in the resonance scheme may be changed depending on implementation.

For example, as shown in FIG. 18, ping transmission in the induction scheme may be initiated first, and beacon transmission in the resonance scheme may be subsequently initiated.

In another embodiment of the present disclosure, beacon transmission in the resonance scheme may be initiated first, and ping transmission in the induction scheme may be subsequently initiated.

In another embodiment of the present disclosure, ping transmission in the induction scheme and beacon transmission in the resonance scheme may be performed simultaneously in a non-overlapping manner.

When presence of a receiver is confirmed according to ping transmission in the induction scheme or beacon transmission in the resonance scheme, the wireless power transmission apparatus may establish an out-of-band communication link (S1809 to S1811).

Subsequently, the wireless power transmission apparatus may receive the receive power intensity information corresponding to the induction scheme and/or the receive power intensity information corresponding to the resonance scheme from the wireless power reception apparatus through the established out-of-band communication link.

The wireless power transmission apparatus may determine whether the wireless power reception apparatus supports the multi-mode, based on the received receive power intensity information (S1815).

For example, if the wireless power transmission apparatus receives both the receive power intensity information corresponding to the induction scheme and the receive power intensity information corresponding to the resonance scheme via the out-of-band communication link, it may determine that the wireless power reception apparatus supports the multi-mode.

On the other hand, if the wireless power transmission apparatus receives the receive power intensity information corresponding to the induction scheme or the receive power intensity information corresponding to the resonance scheme via the out-of-band communication link, it may determine that the wireless power reception apparatus supports a single mode.

If the wireless power reception apparatus supports the multi-mode as a result of the determination in step 1815, the wireless power transmission apparatus may select an optimal wireless power transmission scheme based on the receive power intensity information corresponding to the induction scheme and the receive power intensity information corresponding to the resonant mode (S1817).

On the other hand, if the wireless power reception apparatus supports the multi-mode as a result of the determination in step 1815, the wireless power transmission apparatus may select a wireless power transmission scheme supportable supported by the wireless power reception apparatus, based on the information received via the out-of-band communication link (S1819).

Thereafter, the wireless power transmission apparatus may transmit information about the wireless power transmission scheme selected in step 1817 or 1819 to the wireless power reception apparatus (S1821).

In this operation, the wireless power transmission apparatus may transmit information about the selected wireless power transmission scheme to the wireless power reception apparatus via the in-band or out-of-band communication link according to a wireless power transmission scheme supported by the wireless power reception apparatus.

The wireless power transmission apparatus may perform charging by transmitting wireless power to the wireless power reception apparatus in the wireless power transmission scheme selected in step 1817 or 1819 (S1823).

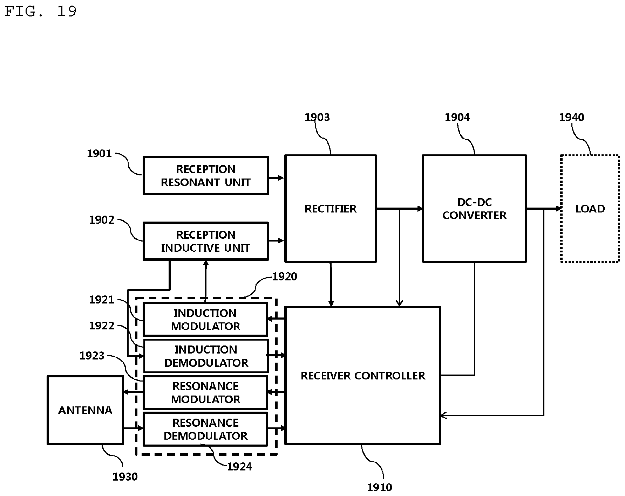

FIG. 19 is a block diagram illustrating the structure of a wireless power reception apparatus according to an embodiment of the present disclosure.

Referring to FIG. 19, a wireless power transmission apparatus may include a reception resonant unit 1901, a reception inductive unit 1902, a rectifier 1903, a DC-DC converter 1904, a receiver controller 1910, a modulation/demodulation unit 1920, an antenna 1930, and a load 1940.

Here, the modulation/demodulation unit 1920 may include an induction modulator 1921, an induction demodulator 1922, a resonance modulator 1923, and a resonance demodulator 1924.

The reception resonant unit 1901 may transfer an AC signal received using the resonance scheme to the rectifier 1903.

The reception inductive unit 1902 may transfer an AC signal received using the induction scheme to the rectifier 1903.

The rectifier 1903 may function to convert the AC signal applied by the reception resonant unit 1901 and/or the reception inductive unit 1902 into a DC signal.

At this time, the output voltage of the rectifier 1903 may be monitored by the receiver controller 1910.

The DC-DC converter 1904 may convert the rectified DC voltage into a specific DC voltage required by the load 1940.

The receiver controller 1910 may set the specific DC voltage required by the load 1940 in the DC-DC converter 1904.

In addition, if the DC voltage applied to the DC-DC converter 1904 is greater than or equal to a predetermined reference value (for example, the DC voltage exceeds the specific DC voltage required by the load), the receiver controller 1910 may drive a predetermined control circuit (not shown) configured to cut off overvoltage.

As another example, the wireless power reception apparatus may be provided with a separate overvoltage/overcurrent cutoff circuit. In this case, the overvoltage/overcurrent cutoff circuit may prevent the load from being damaged by automatically cutting off or absorbing the voltage applied to the load when the voltage/current applied to the load is greater than or equal to a reference value.

The receiver controller 1910 may measure the receive power intensity and transmit the measurement result to the wireless power transmission apparatus through the modulation/demodulation unit 1920.

In addition, the receiver controller 1910 may measure the intensity of the current/voltage applied to the load and transmit the measurement result to the wireless power transmission apparatus through the modulation/demodulation unit 1920.

For example, when a digital ping received through the reception inductive unit 1902 is sensed, the receiver controller 1910 may measure the receive power intensity of the digital ping and transmit a predetermined symbol corresponding to the measurement result to the induction modulator 1920. Then, the induction modulator 1920 may convert the received symbol into a predefined pulse pattern, and transmit the pattern to the reception inductive unit 1920 at a predetermined operational frequency of the induction scheme.

In another example, the receiver controller 1910 may measure the intensity of the output voltage of the rectifier 1903, and may generate and transmit a symbol corresponding to the measured intensity of the output voltage to the resonance modulator 1923.

The resonance modulator 1923 may modulate the received symbol according to an algorithm defined in the out-of-band communication and then deliver the modulated symbol to the antenna 1930. For example, the out-of-band communication may be one of Bluetooth low-power communication, Long Term Evolution (LTE)/LTE-Advanced communication, Wi-Fi communication, RFID (Radio Frequency Identification) communication, near field communication (NFC), and infrared communication.

In addition, the out-of-band communication signal received through the antenna 1930 may be demodulated by the resonance demodulator 1924 and transmitted to the receiver controller 1910.

In addition, the in-band communication signal received through the reception inductive unit 1902 may be demodulated by the induction demodulator 1922 and transmitted to the receiver controller 1910.

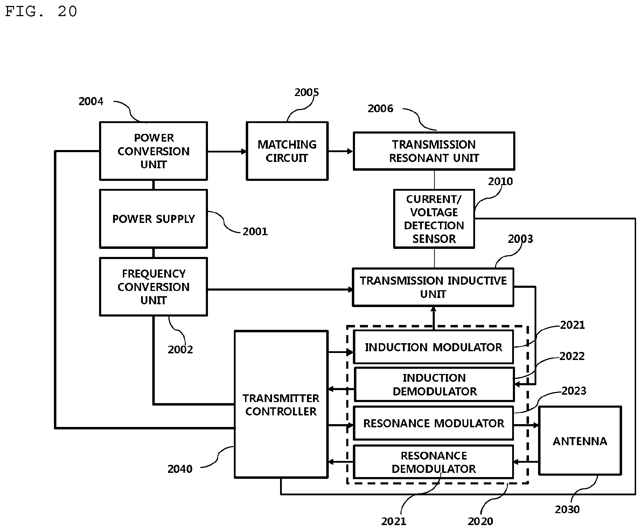

FIG. 20 is a block diagram illustrating the structure of a wireless power transmission apparatus according to an embodiment of the present disclosure.

Referring to FIG. 20, the wireless power transmission apparatus may include a power supply 2001, a frequency conversion unit 2002, a transmission inductive unit 2003, a power conversion unit 2004, a matching circuit 2005, a transmission resonant unit 2006, a current/voltage detection sensor 2010, a modulation/demodulation unit 2020, an antenna 2030, and a transmitter controller 2040. Here, the modulation/demodulation unit 2020 may include an induction modulator 2021, an induction demodulator 2022, a resonance modulator 2023, and a resonance demodulator 2024.

The wireless power transmission apparatus according to the present disclosure may transmit wireless power using the induction scheme and the resonance scheme.

The power supply 2001 may supply a specific supply voltage to the frequency conversion unit 2002 and/or the power conversion unit 2004 under control of the transmitter controller 2040. Here, the supply voltage may be a DC voltage or an AC voltage.

In the induction scheme, the power supplied by the power supply 2004 is supplied to the frequency conversion unit 2002. Then, the frequency conversion unit 2002 may perform frequency conversion according to a predetermined control signal of the transmitter controller 2040 to adjust the intensity of the power supplied to the transmission inductive unit 2003. That is, the frequency conversion unit 2002 may control the intensity of the output voltage through frequency shifting in the operational frequency band.

In addition, the transmitter controller 2040 may transmit a predetermined symbol for in-band communication to the inductance modulator 2021. Then, the induction modulator 2021 may generate a pulse pattern corresponding to the received symbol and transmit the same to the transmission inductive unit 2003. The transmission inductive unit 2003 may mix the received pulse pattern with the AC signal received from the frequency conversion unit 2002 and transmit the mixed signal.

The induction demodulator 2022 may generate a symbol by demodulating a feedback signal applied to transmission inductive unit 2003 and transmit the generated symbol to the transmitter controller 2040.

The transmitter controller 2040 according to the present disclosure may receive, from the induction generator 2022, a symbol corresponding to the intensity of receive power corresponding to the induction scheme or the intensity of power applied to the load.

Thereafter, the transmitter controller 2040 may calculate the inductive power transmission efficiency based on the received receive power intensity or calculate the inductive charging efficiency based on the intensity of the power applied to the load.

In the resonance scheme, the power conversion unit 2004 may convert the voltage received from the power supply 2001 under control of the transmitter controller 2040 into a specific voltage. For this end, the power conversion unit 2004 may include at least one of a DC/DC converter, an AC/DC converter, and a power amplifier.

The matching circuit 2005 is a circuit that matches the impedance between the power conversion unit 2004 and the transmission resonant unit 2006 to maximize power transmission efficiency.

The transmission resonant unit 2006 may wirelessly transmit power using a specific resonance frequency according to the voltage applied by the matching circuit 2005.

In addition, the transmitter controller 2040 may transmit a predetermined symbol or packet for out-of-band communication to the resonance modulator 2023. Then, the resonance modulator 2023 may modulate the received symbol or packet according to the out-of-band communication scheme and deliver the modulated symbol or packet to the antenna 2030.

The transmitter controller 2040 may also receive the packet demodulated by the resonance demodulator 2021.

For example, when the transmitter controller 2040 receives the packet including the receive power intensity information corresponding to the resonance scheme or the intensity information about the power applied to the load from the resonance demodulator 2012, it may calculate the power transmission efficiency based on the received receive power intensity or may calculate the resonance charging efficiency based on the intensity of the power applied to the load.

In particular, the transmitter controller 2040 according to the present disclosure may determine an optimal wireless power transmission scheme based on the calculated power transmission efficiency or charging efficiency.

Thereafter, the transmitter controller 2040 may control the wireless power to be transmitted according to the determined wireless power transmission scheme such that charging of the wireless power reception apparatus is performed.

According to another embodiment of the present disclosure, the transmitter controller 2040 may receive, from the resonance demodulator 2021, a packet including the receive power intensity information corresponding to the induction scheme and/or the resonance scheme and/or the intensity information about the power applied to the load.

The transmitter controller 2040 may also transmit information about the determined wireless power transmission scheme to the induction modulator 2021 or the resonance modulator 2023 to cause the wireless power reception apparatus to recognize the wireless power transmission scheme determined by the wireless power transmission apparatus.

In the above description, the wireless power transmission apparatus calculates power transmission efficiency or charging efficiency based on the reception sensitivity or received signal strength for each wireless power transmission scheme measured by the wireless power reception apparatus or the intensity of the voltage applied to the load, and selects an optimal wireless power transmission scheme based on the result of calculation. However, this is merely one embodiment. In another embodiment of the present disclosure, the wireless power reception apparatus may calculate power transmission efficiency or charging efficiency based on the received signal strength measured for each wireless power transmission scheme or the intensity of the voltage applied to the load, and select an optimal wireless power transmission scheme according to the result of calculation. Then, the wireless power reception apparatus may transmit information about the selected wireless power transmission scheme to the wireless power transmission apparatus via an in-band or out-of-band communication link.

In another example, the wireless power transmission apparatus may receive the information on the received signal strength measured for each wireless power transmission scheme from the wireless power reception apparatus, calculate the power transmission efficiency, and determine an initial wireless power transmission scheme based on the result of calculation.

Thereafter, the wireless power transmission apparatus may perform wireless charging in the determined wireless power transmission scheme.

During wireless charging, the wireless power reception apparatus may calculate the charging efficiency by monitoring the intensity of the voltage applied to the load. If the charging efficiency falls below a predetermined reference value, the wireless power reception apparatus may transmit, to the wireless power transmission apparatus, a predetermined control signal requesting change of the wireless power transmission scheme. Here, the control signal requesting change may include information about the calculated charging efficiency corresponding to the currently selected wireless power transmission system.

Upon receiving the control signal requesting change of the wireless power transmission scheme, the wireless power transmission apparatus may start transmitting wireless power using a wireless power transmission scheme different from the wireless power transmission scheme currently in operation.

It is apparent to those skilled in the art that the present disclosure may be embodied in specific forms other than those set forth herein without departing from the spirit and essential characteristics of the present disclosure. Therefore, the above embodiments should be construed in all aspects as illustrative and not restrictive. The scope of the disclosure should be determined by the appended claims and their legal equivalents, and all changes coming within the meaning and equivalency range of the appended claims are intended to be embraced therein.

## Claims

1. A method for transmitting wireless power by a wireless power transmission apparatus for wirelessly transmitting power to a wireless power reception apparatus, the method comprising:
transmitting a first signal based on a first wireless power transmission scheme;
transmitting a second signal based on a second wireless power transmission scheme;
receiving, from the wireless power reception apparatus, a measurement result corresponding to at least one of the first signal and the second signal; and
selecting a wireless power transmission scheme for the wireless power reception apparatus based on the measurement result.

2. The method according to claim 1, wherein the first wireless power transmission scheme is an electromagnetic induction scheme and the second wireless power transmission scheme is an electromagnetic resonance scheme.

3. The method according to claim 2, wherein the first signal is a ping signal and the second signal is a beacon signal.

4. The method according to claim 3, wherein the ping signal is a digital ping signal and the beacon signal is a long beacon signal.

5. The method according to claim 1, further comprising:
calculating a power transmission efficiency for each of the wireless power transmission schemes based on the received measurement result,
wherein the wireless power transmission scheme is selected based on the calculated power transmission efficiency.

6. The method according to claim 5, wherein the received measurement result comprises received signal strength information corresponding to at least one of the first signal and the second signal.

7. The method according to claim 6, wherein the received signal strength information is rectifier output voltage intensity information about a receiver.

8. The method according to claim 1, further comprising:
calculating a charging efficiency for each of the wireless power transmission schemes based on the received measurement result,
wherein the wireless power transmission scheme is selected based on the calculated charging efficiency.

9. The method according to claim 8, wherein the received measurement result comprises information about a voltage level applied to a load of the wireless power reception apparatus corresponding to at least one of the first signal and the second signal.

10. The method according to claim 9, wherein the charging efficiency is calculated based on the voltage level applied to the load and a pre-collected voltage level required by the load.

11. The method according to claim 2, wherein the measurement result corresponding to the first signal is received through in-band communication defined in the electromagnetic induction scheme.

12. The method according to claim 2, wherein the measurement result corresponding to the second signal is received through out-of-band communication defined in the electromagnetic resonance scheme.

13. The method according to claim 2, wherein the measurement result corresponding to the first signal and the second signal is received through out-of-band communication defined in the electromagnetic resonance scheme.

14. The method according to claim 1, wherein the first signal and the second signal are repeatedly transmitted on predefined cycles in a non-overlapping manner, respectively.

15. The method according to claim 1, further comprising:
transmitting information about the selected wireless power transmission scheme to the wireless power reception apparatus.

16. A method for receiving wireless power by a wireless power reception apparatus for receiving wireless power from a wireless power transmission apparatus, the method comprising:
measuring a received signal strength of a first signal based on a first wireless power transmission scheme;
transmitting information about the measured received signal strength of the first signal to the wireless power transmission apparatus;
measuring a received signal strength of a second signal based on a second wireless power transmission scheme; and
transmitting information about the measured received signal strength of the second signal to the wireless power transmission apparatus,
wherein the wireless power is received in a wireless power transmission scheme selected according to a power transmission efficiency calculated based on the information about the received signal strengths of the first signal to the second signal.

17. The method according to claim 16, wherein the first wireless power transmission scheme is an electromagnetic induction scheme and the second wireless power transmission scheme is an electromagnetic resonance scheme.

18. The method according to claim 17, wherein the first signal is a ping signal and the second signal is a beacon signal.

19. The method according to claim 18, wherein the ping signal is a digital ping signal and the beacon signal is a long beacon signal.

20. The method according to claim 16, wherein the received signal strengths are rectifier output voltage strengths of the wireless power reception apparatus.

21. The method according to claim 16, further comprising:
receiving, from the wireless power transmission apparatus, information about the selected wireless power transmission scheme.

22. The method according to claim 17, wherein the information about the received signal strength of the first signal is transmitted to the wireless power transmission apparatus through in-band communication defined in the electromagnetic induction method.

23. The method according to claim 17, wherein the information about the received signal strength of the second signal is transmitted to the wireless power transmission apparatus through out-of-band communication defined in the electromagnetic resonance scheme.

24. The method according to claim 17, wherein information about the received signal strengths corresponding to the first signal and the second signal is transmitted to the wireless power transmission apparatus through out-of-band communication defined in the electromagnetic resonance scheme.

25. A wireless power transmission apparatus for wirelessly transmitting power to a wireless power reception apparatus, the wireless power transmission apparatus comprising:
a first transmission unit configured to transmit wireless power based on an electromagnetic induction scheme;
a second transmission unit configured to transmit wireless power based on an electromagnetic resonance scheme;
a first communication unit configured to perform in-band communication;
a second communication unit configured to perform out-of-band communication; and
a controller configured to:
control a first signal and a second signal to be transmitted in a predetermined pattern through the first transmission unit and the second transmission unit to sense presence of a receiver,
receive a measurement result corresponding to at least one of the first signal and the second signal from the wireless power reception apparatus using at least one of the in-band communication and the out-of-band communication; and
select a wireless power transmission scheme based on the measurement result.

26. The wireless power transmission apparatus according to claim 25, wherein the first signal is a ping signal and the second signal is a beacon signal.

27. The wireless power transmission apparatus according to claim 26, wherein the ping signal is a digital ping signal and the beacon signal is a long beacon signal.

28. The wireless power transmission apparatus according to claim 25, wherein the controller calculates a power transmission efficiency for each of the wireless power transmission schemes based on the measurement result, and selects the wireless power transmission scheme based on the calculated power transmission efficiency.

29. The wireless power transmission apparatus according to claim 28, wherein the measurement result comprises received signal strength information corresponding to at least one of the first signal and the second signal.

30. The wireless power transmission apparatus according to claim 29, wherein the received signal strength information is rectifier output voltage intensity information about the wireless power reception apparatus.

31. The wireless power transmission apparatus according to claim 25, wherein the controller calculates a charging efficiency for each of the wireless power transmission schemes based on the measurement result, and selects the wireless power transmission scheme based on the calculated charging efficiency.

32. The wireless power transmission apparatus according to claim 31, wherein the measurement result comprises information about a voltage level applied to a load of the wireless power reception apparatus corresponding to at least one of the first signal and the second signal,
wherein the controller calculates the charging efficiency based on the voltage level applied to the load and a pre-collected voltage level required by the load.

33. The wireless power transmission apparatus according to claim 25, wherein the controller controls the first signal and the second signal to be repeatedly transmitted on predefined cycles in a non-overlapping manner, respectively.

34. The wireless power transmission apparatus according to claim 25, wherein the controller transmits information about the selected wireless power transmission scheme to the wireless power reception apparatus using one of the in-band communication or the out-of-band communication.

35. A wireless power reception apparatus for receiving wireless power from a wireless power transmission apparatus, the wireless power reception apparatus comprising:
a first reception unit configured to receive wireless power based on an electromagnetic induction scheme;
a second reception unit configured to receive wireless power based on an electromagnetic resonance scheme;
a first communication unit configured to perform in-band communication;
a second communication unit configured to perform out-of-band communication; and
a controller configured to transmit, upon receiving a first signal and a second signal through the first reception unit and the second reception unit, a measurement result corresponding to at least one of the first signal and the second signal to the wireless power transmission apparatus using at least one of the in-band communication and the out-of-band communication.
